# EUROPEAN PATENT SPECIFICATION

(11) **EP 1 250 369 B1**
(45) Date of publication and mention of the grant of the patent: **08.06.2005**
(21) Application number: 00978776.3
(22) Date of filing: 18.11.2000
(51) Int. Cl.: C08G 18/38, G02B 1/04, G02B 5/23

(54) **METHOD OF PREPARING AN OPTICAL POLYMERIZATE**
VERFAHREN ZUR HERSTELLUNG EINES OPTISCHEN POLYMEREN
PROCEDE DE PREPARATION D'UN POLYMERISAT OPTIQUE

(30) Priority: 18.11.1999 US 166184 P; 25.10.2000 US 695325; 25.10.2000 US 695332
(43) Date of publication of application: 23.10.2002
(73) Proprietor: PPG Industries Ohio, Inc., Cleveland, OH 44111 (US)
(72) Inventor: OKOROAFOR, Michael, O., Export, PA 15632 (US); SMITH, Robert, A., Murrysville, PA 15668 (US); GRAHAM, Marvin J., Monroeville, PA 15146 (US); TABAKOVIC, Rijat, Troy, MI48084 (US); HEROLD, Robert, D., Monroeville, PA 15146 (US)
(74) Representative: Sternagel, Fleischer, Godemeyer & Partner Patentanwälte
(86) International application number: PCT/US2000/031650
(87) International publication number: WO 2001/036507

(56) References cited:
- EP-A- 0 329 387
- GB-A- 1 501 801
- US-A- 5 498 686
- US-A- 5 932 681

## Description

### 1. Field of the Invention

The present invention relates to a method of preparing a polymerizate from a two-component organic composition, the polymerizate having a refractive index of at least 1.6, an Abbe number of at least 33 and an initial Barcol hardness of at least 1. More particularly, the present invention relates to polymerizing certain two-component organic compositions comprising at least one polycyanate reactant having at least two isocyanate and/or isothiocyanate groups, and a polyamine having at least two primary and/or secondary amine groups wherein the molar equivalent ratio of (NCO + NCS) groups from said first component to (-NH₂ + -NH-) groups from said second component is from 0,5 to 100. The present invention also relates to polymerizates and photochromic articles.

### 2. Description of the Prior Art

A number of organic polymeric materials, e.g., plastics, have been developed as alternatives and replacements for glass in applications such as optical lenses, fiber optics, windows and automotive, nautical and aviation transparencies. As used herein, the term 'glass' is meant to refer to silica-based inorganic glass. These polymeric materials can provide advantages relative to glass, including, shatter resistance, lighter weight for a given application, ease of molding and ease of dying. Representative examples of such polymeric materials include, poly(methyl methacrylate), thermoplastic polycarbonate and poly[diethylene glycol bis(allylcarbonate)].

The refractive indices of many polymeric materials are generally lower than that of glass. For example, the refractive index of poly[diethylene glycol bis(allylcarbonate)] is about 1.50, compared to that of high index glass, which can range, for example, from 1.60 to 1.80. When fabricating lenses to correct a given degree of visual defect, e.g., a correction for myopia, the use of a polymeric material having a lower refractive index will require a thicker lens relative to a material having a higher refractive index, e.g., high index glass. When the degree of correction required is substantial, as in the case of severe myopia, a lens fabricated from a low index polymeric material can be required to be very thick. A very thick lens may negate any benefit resulting from the use of lower density lens materials relative to an equivalent degree of correction obtained from a higher refractive index glass lens. In addition, thicker optical lenses are not aesthetically desirable.

It is known that polymeric materials having refractive indices greater than 1.50 can be prepared from aromatic monomers and monomers containing halogens and/or sulfur atoms. The materials from which lenses, and in particular optical lenses, are fabricated can be categorized by their refractive indices. As those skilled in the art can appreciate, low indices typically include indices of refraction of from less than 1.50 through 1.53; middle indices comprise indices of refraction of from 1.54 through 1.57; and high indices commonly include indices of refraction of 1.58 and greater. Lenses prepared from polymeric materials having high refractive indices typically also have lower Abbe numbers (also known as nu-values). Lower Abbe numbers are indicative of an increasing level of chromatic dispersion, which is typically manifested as an optical distortion at or near the rim of the lens.

U.S. Patent 5,961,889 to Jiang et al. discloses optical polymers, for use in lenses, prepared from a polythiol group-containing component, a polyisocyanate group-containing component and/or a polyfunctional vinyl group-containing component. The polymers disclosed typically had refractive indices less than 1.69 and Abbe number less than 35.

U.S. Patent No. 5,932,681 to Herold et al. discloses an optical polymer, for use as a lens material, prepared from an isocyanate or isothiocyanate and a polythiol. The polymers disclosed have a refractive index of at least 1.57 and an Abbe number of at least 33.

U.S. Patent No. 5,679,756 to Zhu et al. discloses an optical polymer described as a thermoplastic thiourethane-urethane copolymer prepared by reacting an aliphatic diisocyanate with a dithiol to form a thiourethane prepolymer, which is then reacted with a diisocyanate and a polyol. The polymers disclosed typically had a refractive index between 1.57 and 1.60 and Abbe number between 35 and 38.

While the optical polymers discussed above have adequate refractive indices and chromatic dispersion, they do not necessarily have the degree of impact resistance required to be suitable for use as daily wear lenses for eyeglasses.

It is accordingly desirable then to identify new polymeric materials, for example polymerizates, which can be used to prepare transparent polymerizates, particularly optical lenses that possess a combination of high refractive index and adequately high Abbe number as well as possessing the physical properties, in particular impact resistance, that are at least equivalent to and preferably better than those of lower index polymeric materials.

### SUMMARY OF THE INVENTION

The present invention provides a method of preparing a polymerizate, which includes the step of polymerizing a two-component composition, which includes:
(a) a first component containing at least one polycyanate reactant having at least two functional groups selected from isocyanate, isothiocyanate and combinations thereof, the polycyanate reactant being the reaction product of:
   (i) a polythiol monomer having at least two thiol groups; and
   (ii) a polycyanate monomer having at least two functional groups selected from isocyanate, isothiocyanate and combinations thereof; and (b) a second component containing at least one polyamine reactant having at least two functional groups selected from primary amine, secondary amine and combinations thereof; wherein the molar equivalent ratio of (NCO + NCS) groups from the first component to (-NH₂ + -NH-) groups from the second component is from 0.5 to 100.

The present invention is also directed to polymerizates prepared according to the method of the present invention.

The present invention is further directed to photochromic articles that may be prepared from the polymerizates of the present invention.

### DETAILED DESCRIPTION OF THE INVENTION

The present invention provides a method of preparing a polymerizate, which includes the step of polymerizing a two-component composition comprising:
(a) a first component containing at least one polycyanate reactant having at least two functional groups selected from isocyanate, isothiocyanate and combinations thereof, the polycyanate reactant being the reaction product of,
   (i) a polythiol monomer having at least two thiol groups;
   (ii) a polycyanate monomer having at least two functional groups selected from isocyanate, isothiocyanate and combinations thereof; and
   (iii) optionally a reactive hydrogen material having at least two reactive hydrogen groups, the reactive hydrogen material being selected from polyols, materials having both hydroxyl and thiol groups, and mixtures thereof, the relative amounts of (i), (ii) and (iii) being selected such that the molar equivalents ratio of (NCO + NCS)/(SH + OH) is greater than 1.0; and
(b) a second component containing at least one polyamine reactant having at least two functional groups selected from primary amine, secondary amine and combinations thereof. The first and second components are selected such that when they are polymerized, they provide a polymerizate having a refractive index of from 1.57 to 1.80, preferably 1.60 to 1.75; an Abbe number of at least 30, preferably at least 33; and an initial Barcol hardness of at least 1. The refractive index is determined in accordance with American Standard Test Method (ASTM) number D 542-95. The Abbe number or nu-value is determined using an appropriate instrument, for example a Bausch & Lomb ABBE-3L Refractometer. The initial Barcol hardness (also commonly referred to as a zero second Barcol hardness) is determined in accordance with ASTM No. D 2583-95.

The polycyanate reactant of the first component of the two-component composition has at least two functional groups selected from isocyanate (-NCO), isothiocyanate (-NCS) and combinations of isocyanate and isothiocyanate groups. As used herein, the term "cyanate" refers to isocyanate and isothiocyanate groups that are unblocked (or uncapped), and that are capable of forming a covalent bond with a reactive hydrogen group, e.g., a thiol, hydroxyl or amine group.

The polycyanate reactant is the reaction product of a polythiol monomer, a polycyanate monomer and optionally a reactive hydrogen material, such as a polyol or a material having both hydroxyl and thiol groups. In preparing the polycyanate reactant, the relative amounts of polythiol monomer, polycyanate monomer and optional reactive hydrogen material are selected such that the molar equivalents ratio of (NCO + NCS)/(SH + OH) is greater than 1.0, e.g., from 1.2 : 1.0 to 4.0 : 1.0 or from 2.0 : 1.0 to 3.0 : 1.0.

The polycyanate reactant of the first component of the two-component composition has backbone linkages selected from urethane linkages (-NH-C(O)-O-), thiourethane linkages (-NH-C(O)-S-), thiocarbamate linkages (-NH-C(S)-O-), dithiourethane linkages (-NH-C(S)-S-) and combinations thereof. The molecular weight of the polycyanate reactant can vary widely, for example, having a number average molecular (Mn) of from 500 to 15,000, or from 500 to 5000, as determined by gel permeation chromatography (GPC) using polystyrene standards.

Polythiol monomers that are used to prepare the polycyanate reactant have at least two thiol groups and may be selected from aliphatic polythiols, cycloaliphatic polythiols, aromatic polythiols and mixtures thereof. In addition, the polythiol monomer may also contain linkages selected from ether linkages (-O-), sulfide linkages (-S-), polysulfide linkages (-Sₓ-, wherein x is at least 2, e.g., from 2 to 4) and combinations of such linkages. As used herein, by "thiol," "thiol group," "mercapto" or "mercapto group" is meant an -SH group which is capable of forming a thiourethane linkage, (i.e., -NH-C(O)-S-) with an isocyanate group or a dithioruethane linkage (i.e., -NH-C(S)-S-) with an isothiocyanate group.

Examples of polythiol monomers that may be used to prepare the polycyanate reactant include, but are not limited to, 2,5-dimercaptomethyl-1,4-dithiane, 2,2'-thiodiethanethiol, pentaerythritol tetrakis(3-mercaptopropionate), pentaerythritol tetrakis(2-mercaptoacetate), trimethylolpropane tris(3-mercaptopropionate), trimethylolpropane tris(2-mercaptoacetate), 4-mercaptomethyl-3,6-dithia-1,8-octanedithiol, 4-tert-butyl-1,2-benzenedithiol, 4,4'-thiodibenzenethiol, benzenedithiol, ethylene glycol di(2-mercaptoacetate), ethylene glycol di(3-mercaptopropionate), poly(ethylene glycol) di(2-mercaptoacetate) and poly(ethylene glycol) di(3-mercaptopropionate). Mixtures of polythiol monomers may also be used to prepare the polycyanate reactant.

The polythiol monomer may also be selected from polythiols represented by the following general formula I, 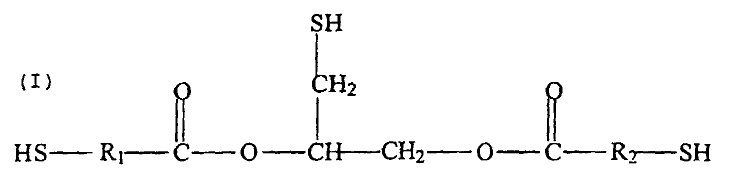 wherein R₁ and R₂ are each independently selected from straight or branched chain alkylene, cyclic alkylene, phenylene and C₁-C₉ alkyl substituted phenylene. Examples of straight or branched chain alkylene from which R₁ and R₂ may be selected include, but are not limited to, methylene, ethylene, 1,3-propylene, 1,2-propylene, 1,4-butylene, 1,2-butylene, pentylene, hexylene, heptylene, octylene, nonylene, decylene, undecylene, octadecylene and icosylene. Examples of cyclic alkylenes from which R₁ and R₂ may each be selected include, but are not limited to, cyclopentylene, cyclohexylene, cycloheptylene, cyclooctylene, and alkyl substituted derivatives thereof. The divalent linking groups R₁ and R₂ may also be selected from phenylene and alkyl substituted phenylene, e.g., methyl, ethyl, propyl, isopropyl and nonyl substituted phenylene. In a preferred embodiment of the present invention, R₁ and R₂ are each methylene or ethylene.

The polythiol represented by general formula I may be prepared from an esterification or transesterification reaction between 3-mercapto-1,2-propanediol (Chemical Abstract Service (CAS) Registry No. 96-27-5) and a thiol functional carboxylic acid or carboxylic acid ester in the presence of a strong acid catalyst, e.g., methane sulfonic acid, with the concurrent removal of water or alcohol from the reaction mixture. More particularly, a preferred polythiol monomer, for which R₁ and R₂ are each methylene with reference to general formula I.

As used herein, the polythiol monomer described and named with reference to general formula I, e.g., thiglycerol bis(2-mercaptoacetate), is meant to include also any related co-product oligomeric species and polythiol monomer compositions containing residual starting materials. For example, when washing the reaction mixture resulting from the esterification of 3-mercapto-1,2-propanediol and a thiol functional carboxylic acid, e.g., 2-mercaptoacetic acid, with excess base, e.g., aqueous ammonia, oxidative coupling of thiol groups may occur. Such an oxidative coupling can result in the formation of oligomeric polythiol species having disulfide linkages, i.e., -S-S- linkages.

The polythiol monomer used to prepare the polycyanate reactant may be a polythiol oligomer having disulfide linkages, which is prepared from the reaction of a polythiol monomer having at least two thiol groups and sulfur in the presence of a basic catalyst. The molar equivalent ratio of polythiol monomer to sulfur is from m to (m-1) wherein m is an integer from 2 to 21. The polythiol monomer may be selected from those examples as recited previously herein, e.g., 2,5-dimercaptomethyl-1,4-dithiane. The sulfur used may be in the form of, for example, crystalline, colloidal, powder and sublimed sulfur, and having a purity of at least 98 percent and preferably at least 99 percent.

Co-product oligomeric species can include oligomers of general formula I which can be described by general formula Ia: 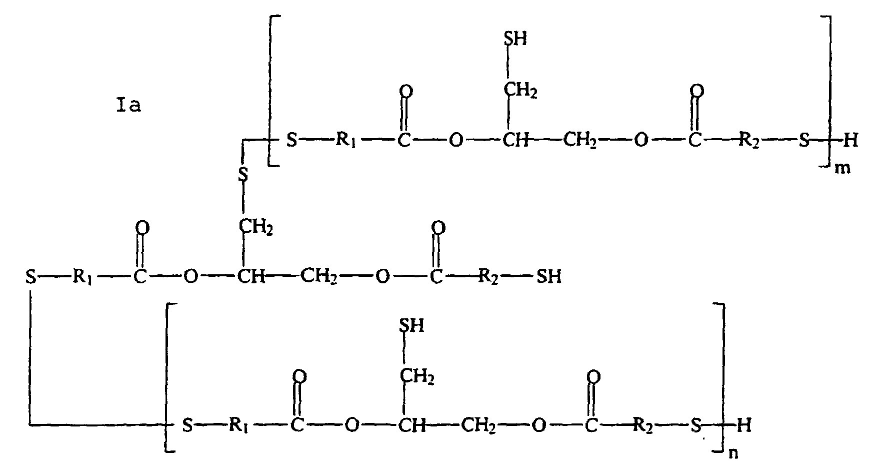 wherein R₁ and R₂ are as described above, n and m are independently an integer from 0 to 21 and n + m is at least 1. General formula Ia demonstrates that oligomerization can occur through disulfide bonds forming between any of the thiol groups in general structure I. Although all possibilities are not shown, general structure Ia is meant to represent all possible oligomers that can form from general structure I.

The basic catalyst used to prepare the polythiol oligomer having disulfide linkages may be selected from ammonia, amine and mixtures thereof. Examples of amines include, but are not limited to alkylamines, e.g., ethylamine and n-butylamine, dialkylamines, e.g., diethylamine, trialkylamines, e.g., triethylamine, morpholine, substituted morpholine, piperidine and substituted piperidine. The basic catalyst is typically present in an amount of from 0.001 to 1.0 mole percent, e.g., from 0.01 to 0.1 mole percent, based on the moles of polythiol monomer present at the beginning of the reaction. The basic catalyst may be charged together to a reaction vessel along with the polythiol monomer and sulfur, or may be added to the reaction vessel after the addition of the polythiol monomer and sulfur.

Synthesis of the polythiol oligomer having disulfide linkages may be conducted in the presence of a solvent, e.g., halogenated hydrocarbons, such as chloroform, aliphatic hydrocarbons, such as hexane, aromatic hydrocarbons, such as toluene, and ethers, such as tetrahydrofuran. The polythiol oligomer may be prepared at a temperature ranging from room temperature to the boiling point of the solvent, e.g., from room temperature to 120°C. The preparation of polythiol oligomers having disulfide linkages that are useful in the present invention is described in further detail in United States Patent No. 5,961,889.

In an embodiment of the present invention, the polythiol oligomer having disulfide linkages may be selected from those represented by the following general formula II, 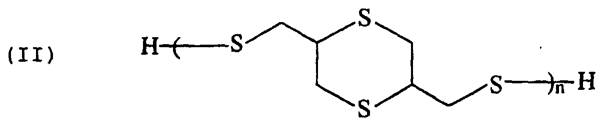 wherein n is an integer from 1 to 21. The polythiol oligomer represented by general formula II may be prepared from the reaction of 2,5-dimeracaptomethyl-1,4-dithiane with sulfur in the presence of a basic catalyst, as described previously herein.

The polycyanate monomer (a) (ii) used to prepare the polycyanate reactant of the first component (a) may be selected from polyisocyanates having at least two isocyanate groups, isothiocyanates having at least two isothiocyanate groups and polycyanates having both isocyanate and isothiocyanate groups. Classes of polyisocyanates from which the polycyanate monomer (a) (ii) may be selected include, but are not limited to: aliphatic polyisocyanates; ethylenically unsaturated polyisocyanates; alicyclic polyisocyanates; aromatic polyisocyanates wherein the isocyanate groups are not bonded directly to the aromatic ring, e.g., α,α'-xylene diisocyanate; aromatic polyisocyanates wherein the isocyanate groups are bonded directly to the aromatic ring, e.g., benzene diisocyanate; aliphatic polyisocyanates containing sulfide linkages; aromatic polyisocyanates containing sulfide or disulfide linkages; aromatic polyisocyanates containing sulfone linkages; sulfonic ester-type polyisocyanates, e.g., 4-methyl-3-isocyanatobenzenesulfonyl-4'-isocyanato-phenol ester; aromatic sulfonic amide-type polyisocyanates; sulfur-containing heterocyclic polyisocyanates, e.g., thiophene-2,5-diisocyanate; halogenated, alkylated, alkoxylated, nitrated, carbodiimide modified, urea modified and biuret modified derivatives of polyisocyanates belonging to these classes; and dimerized and trimerized products of polyisocyanates belonging to these classes. Aliphatic polycyanate monomers containing sulfide linkages as well as other polycyanate monomers having one or more sulfur atoms in the backbone of the monomer are particularly preferred. A particularly preferred sulfur containing polycyanate monomer is one of general formula (III): 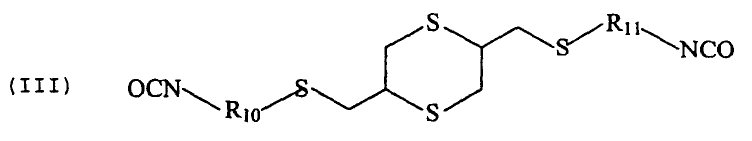 wherein R₁₀ and R₁₁ are each independently C₁ to C₃ alkyl.

Examples of aliphatic polyisocyanates from which the polycyanate monomer (a) (ii) may be selected include, but are not limited to, ethylene diisocyanate, trimethylene diisocyanate, tetramethylene diisocyanate, hexamethylene diisocyanate, octamethylene diisocyanate, nonamethylene diisocyanate, 2,2'-dimethylpentane diisocyanate, 2,2,4-trimethylhexane diisocyanate, decamethylene diisocyanate, 2,4,4,-trimethylhexamethylene diisocyanate, 1,6,11-undecanetriisocyanate, 1,3,6-hexamethylene triisocyanate, 1,8-diisocyanato-4-(isocyanatomethyl) octane, 2,5,7-trimethyl-1,8-diisocyanato-5-(isocyanatomethyl)octane, bis(isocyanatoethyl)-carbonate, bis(isocyanatoethyl) ether, 2-isocyanatopropyl-2,6-diisocyanatohexanoate, lysinediisocyanate methyl ester and lysinetriisocyanate methyl ester.

Examples of ethylenically unsaturated polyisocyanates, include but are not limited to, butene diisocyanate and 1,3-butadiene-1,4-diisocyanate. Alicyclic polyisocyanates from which the polycyanate monomer (a) (ii) may be selected include, but are not limited to, isophorone diisocyanate, cyclohexane diisocyanate, methylcyclohexane diisocyanate, bis(isocyanatomethyl)cyclohexane, bis(isocyanatocyclohexyl)methane, bis(isocyanatocyclohexyl)-2,2-propane, bis(isocyanatocyclohexyl)-1,2-ethane, 2-isocyanatomethyl-3-(3-isocyanatopropyl)-5-isocyanatomethyl-bicyclo[2.2.1]-heptane, 2-isocyanatomethyl-3-(3-isocyanatopropyl)-6-isocyanatomethyl-bicyclo[2.2.1]-heptane, 2-isocyanatomethyl-2-(3-isocyanatopropyl)-5-isocyanatomethyl-bicyclo[2.2.1]-heptane, 2-isocyanatomethyl-2-(3-isocyanatopropyl)-6-isocyanatomethyl-bicyclo[2.2.1]-heptane, 2-isocyanatomethyl-3-(3-isocyanatopropyl)-6-(2-isocyanatoethyl)-bicycle[2.2.1]-heptane, 2-isocyanatomethyl-2-(3-isocyanatopropyl)-5-(2-isocyanatoethyl)-bicycle[2.2.1]-heptane and 2-isocyanatomethyl-2-(3-isocyanatopropyl)-6-(2-isocyanatoethyl)-bicyclo[2.2.1]-heptane.

Examples of aromatic polyisocyanates wherein the isocyanate groups are not bonded directly to the aromatic ring include, but are not limited to, bis(isocyanatoethyl)benzene, α,α,α',α'-tetramethylxylene diisocyanate, 1,3-bis(1-isocyanato-1-methylethyl)benzene, bis(isocyanatobutyl)benzene, bis(isocyanatomethyl)naphthalene, bis(isocyanatomethyl)diphenyl ether, bis(isocyanatoethyl)phthalate, mesitylene triisocyanate and 2,5-di(isocyanatomethyl)furan. Aromatic polyisocyanates, having isocyanate groups bonded directly to the aromatic ring, from which the polycyanate monomer (a) (ii) may be selected include, but are not limited to, phenylene diisocyanate, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, naphthalene diisocyanate, methylnaphthalene diisocyanate, biphenyl diisocyanate, ortho- toluidine diisocyanate, ortho-tolylidine diisocyanate, ortho-tolylene diisocyanate, 4,4'-diphenylmethane diisocyanate, bis(3-methyl-4-isocyanatophenyl)methane, bis(isocyanatophenyl)ethylene, 3,3'-dimethoxy-biphenyl-4,4'-diisocyanate, triphenylmethane triisocyanate, polymeric 4,4'-diphenylmethane diisocyanate, naphthalene triisocyanate, diphenylmethane-2,4,4'-triisocyanate, 4-methyldiphenylmethane-3,5,2',4',6'-pentaisocyanate, diphenylether diisocyanate, bis(isocyanatophenylether)ethyleneglycol, bis(isocyanatophenylether)-1,3-propyleneglycol, benzophenone diisocyanate, carbazole diisocyanate, ethylcarbazole diisocyanate and dichlorocarbazole diisocyanate.

Aliphatic polyisocyanates containing sulfide linkages from which the polycyanate monomer (a)(ii) may be selected include, but are not limited to, thiodiethyl diisocyanate, thiodipropyl diisocyanate, dithiodihexyl diisocyanate, dimethylsulfone diisocyanate, dithiodimethyl diisocyanate, dithiodiethyl diisocyanate, dithiodipropyl diisocyanate and dicyclohexylsulfide-4,4'-diisocyanate. Examples of aromatic polyisocyanates containing sulfide or disulfide linkages include, but are not limited to, diphenylsulfide-2,4'-diisocyanate, diphenylsulfide-4,4'-diisocyanate, 3,3'-dimethoxy-4,4'-diisocyanatodibenzyl thioether, bis(4-isocyanatomethylbenzene)-sulfide, diphenyldisulfide-4,4'-diisocyanate, 2,2'-dimethyldiphenyldisulfide-5,5'-diisocyanate, 3,3'-dimethyldiphenyldisulfide-5,5'-diisocyanate, 3,3'-dimethyldiphenyldisulfide-6,6'-diisocyanate, 4,4'-dimethyldiphenyldisulfide-5,5'-diisocyanate, 3,3'-dimethoxydiphenyldisulfide-4,4'-diisocyanate and 4,4'-dimethoxydiphenyldisulfide-3,3'-diisocyanate.

Aromatic polyisocyanates containing sulfone linkages from which the polycyanate monomer (a)(ii) may be selected include, but are not limited to, diphenylsulfone-4,4'-diisocyanate, diphenylsulfone-3,3'-diisocyanate, benzidinesulfone-4,4'-diisocyanate, diphenylmethanesulfone-4,4'-diisocyanate, 4-methyldiphenylmethanesulfone-2,4'-diisocyanate, 4,4'-dimethoxydiphenylsulfone-3,3'-diisocyanate, 3,3'-dimethoxy-4,4'-diisocyanatodibenzylsulfone, 4,4'-dimethyldiphenylsulfone-3,3'-diisocyanate, 4,4'-di-tert-butyl-diphenylsulfone-3,3'-diisocyanate and 4,4'-dichlorodiphenylsulfone-3,3'-diisocyanate.

Examples of aromatic sulfonic amide-type polyisocyanates that may be used to prepare the polycyanate reactant include, but are not limited to, 4-methyl-3-isocyanato-benzenesulfonylanilide-3'-methyl-4'-isocyanate, dibenzenesulfonyl-ethylenediamine-4,4'-diisocyanate, 4,4'-methoxybenzenesulfonyl-ethylenediamine-3,3'-diisocyanate and 4-methyl-3-isocyanato-benzene-sulfonylanilide-4-ethyl-3'-isocyanate.

Classes of polyisothiocyanates from which the polycyanate monomer (a)(ii) may be selected include, but are not limited to: aliphatic polyisothiocyanates; alicyclic polyisothiocyanates, e.g., cyclohexane diisothiocyanates; aromatic polyisothiocyanates wherein the isothiocyanate groups are not bonded directly to the aromatic ring, e.g., α,α'-xylene diisothiocyanate; aromatic polyisothiocyanates wherein the isothiocyanate groups are bonded directly to the aromatic ring, e.g., phenylene diisothiocyanate; heterocyclic polyisothiocyanates, e.g., 2,4,6-triisothiocyanato-1,3,5-triazine and thiophene-2,5-diisothiocyanate; carbonyl polyisothiocyanates; aliphatic polyisothiocyanates containing sulfide linkages, e.g., thiobis(3-isothiocyanatopropane); aromatic polyisothiocyanates containing sulfur atoms in addition to those of the isothiocyanate groups; halogenated, alkylated, alkoxylated, nitrated, carbodiimide modified, urea modified and biuret modified derivatives of polyisothiocyanates belonging to these classes; and dimerized and trimerized products of polyisothiocyanates belonging to these classes.

Examples of aliphatic polyisothiocyanates from which the polycyanate monomer (a) (ii) may be selected include, but are not limited to, 1,2-diisothiocyanatoethane, 1,3-diisothiocyanatopropane, 1,4-diisothiocyanatobutane and 1,6-diisothiocyanatohexane. Examples of aromatic polyisothiocyanates having isothiocyanate groups bonded directly to the aromatic ring include, but are not limited to, 1,2-diisothiocyanatobenzene, 1,3-diisothiocyanatobenzene, 1,4-diisothiocyanatobenzene, 2,4-diisothiocyanatotoluene, 2,5-diisothiocyanato-m-xylene, 4,4'-diisothiocyanato-1,1'-biphenyl, 1,1'-methylenebis(4-isothiocyanatobenzene), 1,1'-methylenebis(4-isothiocyanato-2-methylbenzene), 1,1'-methylenebis(4-isothiocyanato-3-methylbenzene), 1,1'-(1,2-ethane-diyl)bis(4-isothiocyanatobenzene), 4,4'-diisothiocyanatobenzophenenone, 4,4'-diisothiocyanato-3,3'-dimethylbenzophenone, benzanilide-3,4'-diisothiocyanate, diphenylether-4,4'-diisothiocyanate and diphenylamine-4,4'-diisothiocyanate.

Carbonyl polyisothiocyanates that may be used to prepare the polycyanate reactant of the first component of the two-component composition include, but are not limited to, hexanedioyl diisothiocyanate, nonanedioyl diisothiocyanate, carbonic diisothiocyanate, 1,3-benzenedicarbonyl diisothiocyanate, 1,4-benzenedicarbonyl diisothiocyanate and (2,2'-bipyridine)-4,4'-dicarbonyl diisothiocyanate. Examples of aromatic polyisothiocyanates containing sulfur atoms in addition to those of the isothiocyanate groups, that may be used in present invention include, but are not limited to, 1-isothiocyanato-4-[(2-isothiocyanato)sulfonyl]benzene, thiobis(4-isothiocyanatobenzene), sulfonylbis(4-isothiocyanatobenzene), sulfinylbis(4-isothiocyanatobenzene), dithiobis(4-isothiocyanatobenzene), 4-isothiocyanato-1-[(4-isothiocyanatophenyl)-sulfonyl]-2-methoxybenzene, 4-methyl-3-isothiocyanatobenzene-sulfonyl-4'-isothiocyanate phenyl ester and 4-methyl-3-isothiocyanatobenzene-sulfonylanilide-3'-methyl-4'-isothiocyanate.

The polycyanate monomer (a)(ii) used to prepare the polycyanate reactant of the first component of the two-component composition may also be selected from polycyanate monomers having both isocyanate and isothiocyanate groups, which may be, for example, aliphatic, alicyclic, aromatic, heterocyclic, or contain sulfur atoms in addition to those of the isothiocyanate groups. Examples of such compounds, include, but are not limited to, 1-isocyanato-3-isothiocyanatopropane, 1-isocyanato-5-isothiocyanatopentane, 1-isocyanato-6-isothiocyanatohexane, isocyanatocarbonyl isothiocyanate, 1-isocyanato-4-isothiocyanatocyclohexane, 1-isocyanato-4-isothiocyanatobenzene, 4-methyl-3-isocyanato-1-isothiocyanatobenzene, 2-isocyanato-4,6-diisothiocyanato-1,3,5-triazine, 4-isocyanato-4'-isothiocyanato-diphenyl sulfide and 2-isocyanato-2'-isothiocyanatodiethyl disulfide.

The polycyanate reactant of the first component of the two-component composition may optionally be prepared from a reactive hydrogen material (a)(iii) that is selected from polyols having at least two hydroxyl groups, materials having both hydroxyl and thiol groups, and mixture thereof. As used herein, by "reactive hydrogen material" is meant a material having reactive hydrogen groups that are capable of forming covalent bonds with isocyanate and isothiocyanate groups.

Classes of polyols from which the optional reactive hydrogen material (a)(iii) may be selected include, but are not limited to: straight or branched chain alkane polyols, e.g., 1,2-ethanediol, 1,3-propanediol, 1,2-propanediol, 1,4-butanediol, 1,3-butanediol, glycerol, neopentyl glycol, trimethylolethane, trimethylolpropane, di-trimethylolpropane, erythritol, pentaerythritol and di-pentaerythritol; polyalkylene glycols, e.g., diethylene glycol, dipropylene glycol and higher polyalkylene glycols such as polyethylene glycols having number average molecular weights of, for example, from 200 to 2,000 grams / mole; cyclic alkane polyols, e.g., cyclopentanediol, cyclohexanediol, cyclohexanetriol, cyclohexanedimethanol, hydroxypropylcyclohexanol and cyclohexanediethanol; aromatic polyols, e.g., dihydroxybenzene, benzenetriol, hydroxybenzyl alcohol and dihydroxytoluene; bisphenols, e.g., 4,4'-isopropylidenediphenol; 4,4'-oxybisphenol, 4,4'-dihydroxybenzophenone, 4,4'-thiobisphenol, phenolphthlalein, bis(4-hydroxyphenyl)methane, 4,4'-(1,2-ethenediyl)bisphenol and 4,4'-sulfonylbisphenol; halogenated bisphenols, e.g., 4,4'-isopropylidenebis(2,6-dibromophenol), 4,4'-isopropylidenebis(2,6-dichlorophenol) and 4,4'-isopropylidenebis(2,3,5,6-tetrachlorophenol); alkoxylated bisphenols, e.g., alkoxylated 4,4'-isopropylidenediphenol having from 1 to 70 alkoxy groups, for example, ethoxy, propoxy, α-butoxy and β-butoxy groups; and biscyclohexanols, which can be prepared by hydrogenating the corresponding bisphenols, e.g., 4,4'-isopropylidenebiscyclohexanol, 4,4'-oxybiscyclohexanol, 4,4'-thiobiscyclohexanol and bis(4-hydroxycyclohexanol)methane.

In one embodiment of the present invention the polyol of which the optional reactive hydrogen material (a)(iii) is selected is a polyurethane prepolymer having two or more hydroxy groups. Hydroxy functional polyurethane prepolymers useful in the present invention can be prepared from any of the above listed polyols and a suitable polyisocyanate. The ratio of molar equivalents of hydroxy groups to isocyanate groups being selected such that a hydroxy functional polyurethane prepolymer having essentially no free isocyanate groups is produced. Examples of polyisocyanates suitable for preparing hydroxy functional polyurethane prepolymers include those as recited previously herein. Hydroxy functional polyurethane prepolymers from which the optional reactive hydrogen material (a)(iii) may be selected typically have number average molecular weights (Mn) of less than 50,000, preferably less than 20,000, and more preferably less than 10,000 grams / mole, as determined by gel permeation chromatography (GPC) using polystyrene standards.

Examples of materials having both hydroxyl and thiol groups from which the optional reactive hydrogen material (a)(iii) may be selected include, but are not limited to, 2-mercaptoethanol, 3-mercapto-1,2-propanediol, glycerin bis(2-mercaptoacetate), glycerin bis(3-mercaptopropionate), 1-hydroxy-4-mercaptocyclohexane, 2,4-dimercaptophenol, 2-mercaptohydroquinone, 4-mercaptophenol, 1,3-dimercapto-2-propanol, 2,3-dimercapto-1-propanol, 1,2-dimercapto-1,3-butanediol, trimethylolpropane bis(2-mercaptoacetate), trimethylolpropane bis(3-mercaptopropionate), pentaerythritol mono(2-mercaptoacetate), pentaerythritol bis(2-mercaptoacetate), pentaerythritol tris(2-mercaptoacetate), pentaerythritol mono(3-mercaptopropionate), pentaerythritol bis(3-mercaptopropionate), pentaerythritol tris(3-mercaptopropionate), hydroxymethyl-tris(mercaptoethylthiomethyl)methane, 1-hydroxyethylthio-3-mercaptoethylthiobenzene, 4-hydroxy-4'-mercaptodiphenylsulfone, dihydroxyethyl sulfide mono(3-mercaptopropionate and hydroxyethylthiomethyl-tris(mercaptoethylthio)methane.

The reaction of the polythiol monomer (a)(i), polycyanate monomer (a)(ii) and optional reactive hydrogen material (a)(iii) may be performed in the presence of a suitable catalyst. Classes of suitable catalysts include, but are not limited to, tertiary amines, such as triethylamine, and organometallic compounds, such as dibutyltin dilaurate. Additional examples of catalysts that may be used in the preparation of the polycyanate reactant are recited below. If a catalyst is used in the preparation of the polycyanate reactant, it is typically present in an amount of less than 5 percent by weight, preferably less than 3 percent by weight, and more preferably less than 1 percent by weight, based on the total weight of (a)(i), (a)(ii) and (a)(iii).

The polyamine reactant of the second component (b) of the two-component composition may be selected from aliphatic polyamine, cycloaliphatic polyamines, aromatic polyamines and mixtures thereof. The polyamine reactant has at least two functional groups selected from primary amine (-NH₂), secondary amine (-NH-) and combinations thereof. Preferably the polyamine reactant has at least two primary amine groups.

The polyamine reactant may be selected from any of the family of ethyleneamines, e.g., ethylenediamine (EDA), diethylenetriamine (DETA), triethylenetetramine (TETA), tetraethylenepentamine (TEPA), pentaethylenehexamine (PEHA), piperazine, i.e., diethylenediamine (DEDA), and 2-amino-1-ethylpiperazine. The polyamine reactant may also be selected from one or more isomers of C₁-C₃ dialkyl toluenediamine, such as, 3,5-dimethyl-2,4-toluenediamine, 3,5-dimethyl-2,6-toluenediamine, 3,5-diethyl-2,4-toluenediamine, 3,5-diethyl-2,6-toluenediamine, 3,5-diisopropyl-2,4-toluenediamine, 3,5-diisopropyl-2,6-toluenediamine and mixtures thereof. Additional example of polyamines from which the polyamine reactant may be selected include, but are not limited to methylene dianiline and trimethyleneglycol di(para-aminobenzoate).

In an embodiment of the present invention, the polyamine reactant can generally be described as having a one of the following general structures (IV-VI): 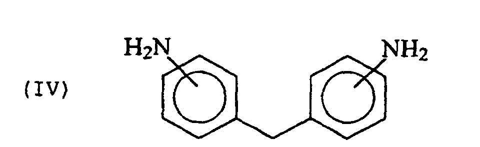 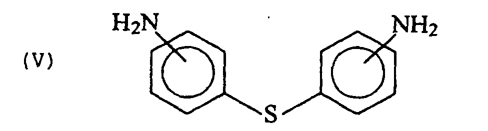 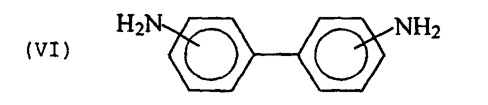 Particularly preferred structures include one or more diamines represented by the following general formulas VII-XX, 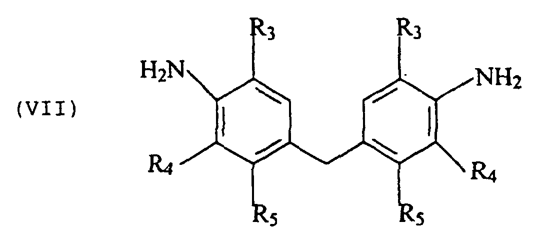 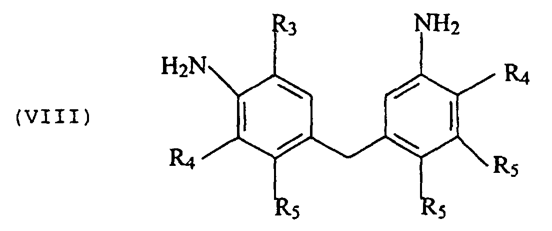 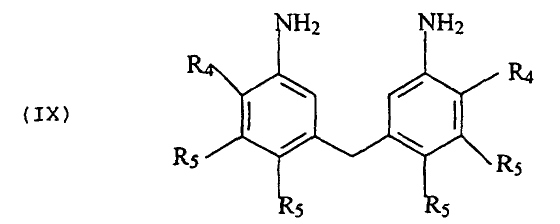 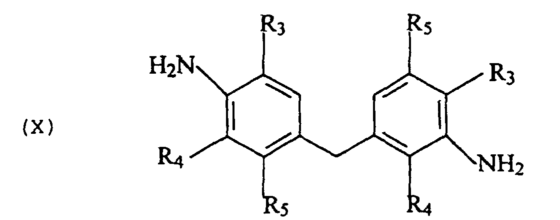 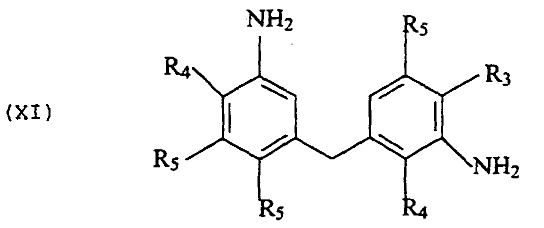 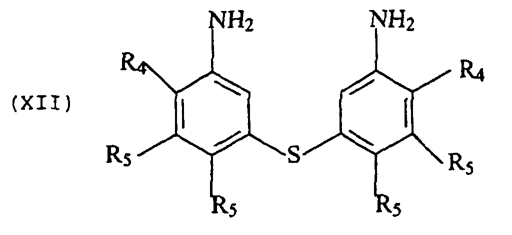 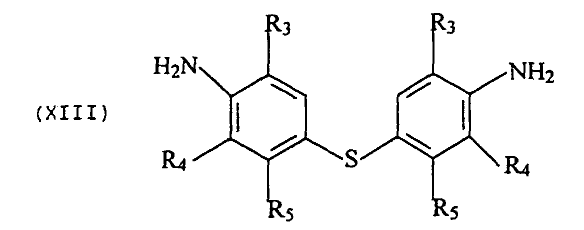 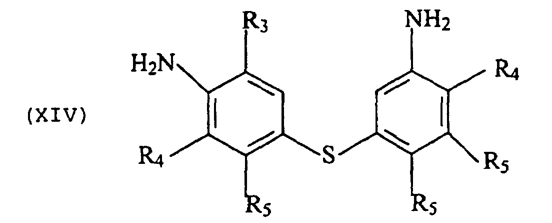 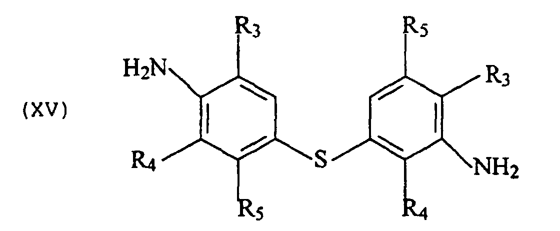 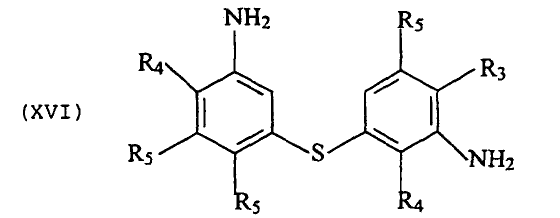 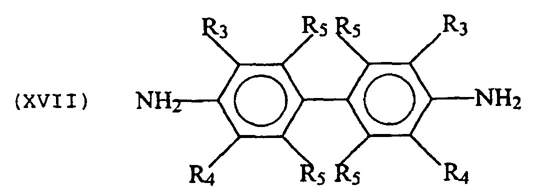 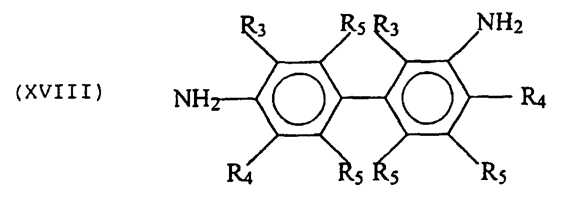 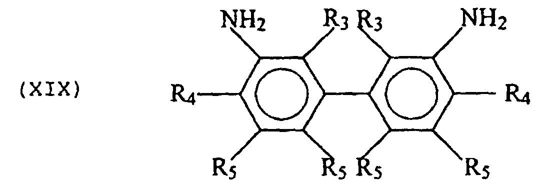 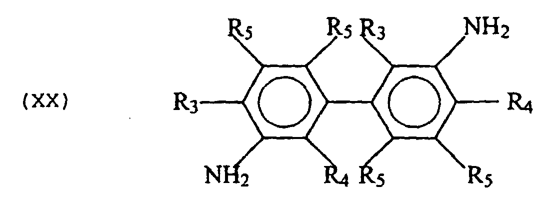 wherein R₃ and R₄ are each independently C₁-C₃ alkyl, and R₅ is selected from hydrogen and halogen, e.g., chlorine and bromine. The diamine represented by general formula VII can be described generally as a 4,4'-methylene-bis(dialkylaniline). Specific examples of diamines represented by general formula VII include, but are not limited to, 4,4'-methylene-bis(2,6-dimethylaniline), 4,4'-methylene-bis(2,6-diethylaniline), 4,4'-methylene-bis(2-ethyl-6-methylaniline), 4,4'-methylene-bis(2,6-diisopropylaniline), 4,4'-methylene-bis(2-isopropyl-6-methylaniline) and 4,4'-methylene-bis(2,6-diethyl-3-chloroaniline). A preferred diamine represented by general formula VII is 4,4'-methylene-bis(2,6-diethyl-3-chloroaniline).

In another embodiment of the present invention, the polyamine reactant can generally be a 2,6-diamino-toluene-3,5-dialkyl sulfide having the following general structures XXI: 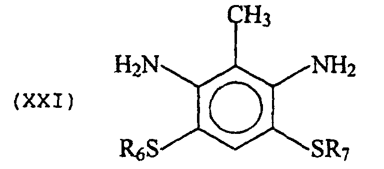 wherein R₆ and R₇ are linear, branched or cyclic C₁ to C₂₀ alkyl. Preferred compounds of general structure XXI are 2,6-diamino-toluene-3,5-dimethyl sulfide and 2,6-diamino-toluene-3,5-diethyl sulfide.

Polymerization of the two-component composition in accordance with the method of the present invention may be accomplished by: mixing the first and second components together using, for example, an impeller or extruder; optionally degassing the combined mixture; optionally adding the mixture to a mold; and then heating the mold and the mixture within it over a period of time. The thermal cure cycle utilized may vary depending on, for example, the reactivity and molar ratio of the components used and the presence of any catalyst(s). Typically, the thermal cure cycle involves heating the combined mixture of the two-component composition from room temperature to as high as 200°C, preferably from 100°C to 140°C over a period of from 0.5 hours to 72 hours, preferably 0.5 to 16 hours.

Catalysts that may be used with the two-component composition include, for example, tertiary amines, e.g., triethylamine, triisopropylamine and N,N-dimethylbenzylamine, and organometallic compounds, e.g., dibutyltin dilaurate, dibutyltin diacetate and stannous octoate. Additional examples of tertiary amines are listed in United States Patent No. 5,693,738 at column 10 lines 6 through 38. Additional examples of organometallic compounds useful as catalysts are listed in United States Patent No. 5,631,339 at column 4, lines 26 through 46. If used, catalysts are typically incorporated into the second component prior to the combination of the first and second components of the two-component composition. Catalyst levels are typically less than 5 % by weight, preferably less than 3 % by weight and more preferably less than 1 % by weight, based on the total weight of the combined first and second components.

The first and second components of the two-component composition are typically polymerized together in amounts sufficient to provide a molar equivalent ratio of (NCO + NCS) groups to (-NH₂ + -NH-) groups of from 0.5 to as much as 100 or more. Acceptable (NCO + NCS)/(-NH₂ + -NH-) ratio ranges include from 0.5 to 50, from 0.5 to 10, from 0.5 to 5, from 0.5 to 3.0, from 0.5 to 1.5 or from 0.8 to 1.2. The exact ratio will depend on the exact properties desired of the final polymerizate.

A preferred method of polymerizing the two component composition is reaction injection molding (RIM). In a RIM process, two or more liquids, which are rapidly reactive, form a solid polymer. The liquids are individually metered through a mixing head into a molding machine, where the solid polymer forms. An example of a RIM machine that may be used as part of the present invention is described in U.S. Patent No. 4,189,070.

A preferred apparatus to carry out the RIM process of the present invention is a machine of modular construction that will allow for accurate metering and thorough mixing over a wide range of stoichiometric ratios. The machine includes a plurality of storage vessels for separately containing reactive liquids. A corresponding plurality of reactant metering cylinders are each connected by appropriate passages to one of the liquid storage vessels. Each cylinder includes a reciprocable piston. Power is provided for reciprocating the pistons of all of the cylinders together. A lever arm is connected at one end to the piston of the first metering cylinder. The lever arm pivotally engages a movable fulcrum, in a slotted connection, at a point spaced from its connection to the first metering cylinder piston. The lever arm also pivotally engages the piston of the other metering cylinder in a slotted connection. Each metering cylinder in turn is connected by appropriate passages to a mixing head, from which the reactive mixture is injected into a molding machine. Continuous ratio control of the reactants is provided by variation in positioning of the movable fulcrum for the lever arm controlling one of the metering cylinders.

Various conventional additives may be incorporated into the two-component organic composition polymerized in the method of the present invention. Such additives may include light stabilizers, heat stabilizers, antioxidants, ultraviolet light absorbers, mold release agents, static (non-photochromic) dyes, pigments and flexibilizing additives, e.g., alkoxylated phenol benzoates and poly(alkylene glycol) dibenzoates. A preferred mold release agent is Zelec® UN, a C₈ to C₁₆ alkyl phosphate ester, sold by E.I. du Pont de Nemours and Company, Wilmington, Deleware. Anti-yellowing additives, e.g., 3-methyl-2-butenol, organo pyrocarbonates and triphenyl phosphite (CAS registry no. 101-02-0), may also be added to two-component organic composition to enhance resistance to yellowing. Such additives are typically present in the two-component composition in amounts totaling less than 10 % by weight, preferably less than 5 % by weight, and more preferably less than 3 % by weight, based on the total weight of the combined first and second components. While such conventional additives may be added to either of the first or second components of the composition, they are typically incorporated into the second component to minimize the potential of adverse interactions with the isocyanate or isothiocyanate groups of the first component.

Polymerizates prepared in accordance with the method of present invention will be solid, and preferably transparent, e.g., suitable for optical or ophthalmic applications. The polymerizates of the present invention will also have a refractive index of from 1.57 to 1.80, preferably 1.60 to 1.75; an Abbe number of at least 30, preferably at least 33; and a zero second Barcol hardness of at least 1, and good impact resistance. The reactants and compounds comprising the first and second components of the two-component composition are selected and combined in amounts that allow the preparation of a polymerizate therefrom, which possesses the above listed characteristics. Solid articles that may be prepared according to the method of the present invention include, but are not limited to, optical lenses, such as plano and ophthalmic lenses, sun lenses, windows, automotive transparencies, e.g., windshields, sidelights and backlights, and aircraft transparencies.

When used to prepare photochromic articles, e.g., lenses, the polymerizate should be transparent to that portion of the electromagnetic spectrum which activates the photochromic substance(s) incorporated in the matrix, i.e., that wavelength of ultraviolet (UV) light that produces the colored or open form of the photochromic substance and that portion of the visible spectrum that includes the absorption maximum wavelength of the photochromic substance in its UV activated form, i.e., the open form. Photochromic substances that may be utilized with the polymerizates of the present invention are organic photochromic compounds or substances containing same that may be incorporated, e.g., dissolved, dispersed or diffused into such polymerizates.

A first group of organic photochromic substances contemplated for use to form the photochromic articles of the present invention are those having an activated absorption maximum within the visible range of greater than 590 nanometers, e.g., between greater than 590 to 700 nanometers. These materials typically exhibit a blue, bluish-green, or bluish-purple color when exposed to ultraviolet light in an appropriate solvent or matrix. Examples of classes of such substances that are useful in the present invention include, but are not limited to, spiro(indoline)naphthoxazines and spiro(indoline)benzoxazines. These and other classes of such photochromic substances are described in the open literature. See for example, U.S. Patents: 3,562,172; 3,578,602; 4,215,010; 4,342,668; 5,405,958; 4,637,698; 4,931,219; 4,816,584; 4,880,667; 4,818,096. Also see for example: Japanese Patent Publication 62/195383; and the text, Techniques in Chemistry, Volume III, "Photochromism," Chapter 3, Glenn H. Brown, Editor, John Wiley and Sons, Inc., New York, 1971.

A second group of organic photochromic substances contemplated for use to form the photochromic articles of the present invention are those having at least one absorption maximum and preferably two absorption maxima, within the visible range of between 400 and less than 500 nanometers. These materials typically exhibit a yellow-orange color when exposed to ultraviolet light in an appropriate solvent or matrix. Such compounds include certain chromenes, i.e., benzopyrans and naphthopyrans. Many of such chromenes are described in the open literature, e.g., U.S. Patents 3,567,605; 4,826,977; 5,066,818; 4,826,977; 5,066,818; 5,466,398; 5,384,077; 5,238,931; and 5,274,132.

A third group of organic photochromic substances contemplated for use to form the photochromic articles of the present invention are those having an absorption maximum within the visible range of between 400 to 500 nanometers and another absorption maximum within the visible range of between 500 to 700 nanometers. These materials typically exhibit color(s) ranging from yellow/brown to purple/gray when exposed to ultraviolet light in an appropriate solvent or matrix. Examples of these substances include certain benzopyran compounds, having substituents at the 2-position of the pyran ring and a substituted or unsubstituted heterocyclic ring, such as a benzothieno or benzofurano ring fused to the benzene portion of the benzopyran. Such materials are the subject of U.S. Patent No. 5,429,774.

Other photochromic substances contemplated are photochromic organo-metal dithizonates, i.e., (arylazo)-thioformic arylhydrazidates, e.g., mercury dithizonates which are described in, for example, U.S. Patent 3,361,706. Fulgides and fulgimides, e.g. the 3-furyl and 3-thienyl fulgides and fulgimides which are described in U.S. Patent 4,931,220 at column 20, line 5 through column 21, line 38.

The photochromic articles of the present invention may contain one photochromic substance or a mixture of photochromic substances, as desired. Mixtures of photochromic substances may be used to attain certain activated colors such as a near neutral gray or brown.

Each of the photochromic substances described herein may be used in amounts and in a ratio (when mixtures are used) such that a polymerizate to which the mixture of compounds is applied or in which they are incorporated exhibits a desired resultant color, e.g., a substantially neutral color such as shades of gray or brown when activated with unfiltered sunlight, i.e., as near a neutral color as possible given the colors of the activated photochromic substances. The relative amounts of the aforesaid photochromic substances used will vary and depend in part upon the relative intensities of the color of the activated species of such compounds, and the ultimate color desired.

The photochromic compounds or substances described herein may be applied to or incorporated into the polymerizate by various methods described in the art. Such methods include dissolving or dispersing the substance within the polymerizate, e.g., imbibition of the photochromic substance into the polymerizate by immersion of the polymerizate in a hot solution of the photochromic substance or by thermal transfer; providing the photochromic substance as a separate layer between adjacent layers of the polymerizate, e.g., as a part of a polymer film; and applying the photochromic substance as a coating or as part of a coating placed on the surface of the polymerizate. The term "imbibition" or "imbibe" is intended to mean and include permeation of the photochromic substance alone into the polymerizate, solvent assisted transfer absorption of the photochromic substance into a porous polymer, vapor phase transfer, and other such transfer mechanisms. One example of an imbibing method includes the steps of coating the photochromic article with the photochromic substance; heating the surface of the photochromic article; followed by removing the residual coating from the surface of the photochromic article.

The amount of photochromic substance or composition containing the same applied to or incorporated into the polymerizate is not critical provided that a sufficient amount is used to produce a photochromic effect discernible to the naked eye upon activation. Generally such amount can be described as a photochromic amount. The particular amount used depends often upon the intensity of color desired upon irradiation thereof and upon the method used to incorporate or apply the photochromic substances. Typically, the more photochromic substance applied or incorporated, the greater is the color intensity. Generally, the amount of total photochromic substance incorporated into or applied to a photochromic optical polymerizate may range from 0.15 to 0.35 milligrams per square centimeter of surface to which the photochromic substance(s) is incorporated or applied.

It is also contemplated that photochromic substances may be added to the two-component organic composition prior to polymerizing, e.g., cast curing, the composition. However, when this is done it is preferred that the photochromic substance(s) be resistant to potentially adverse interactions with, for example, initiator(s) that may be present and / or the isocyanate, isothiocyante and amine groups of the first and second components. These adverse interactions can result in deactivation of the photochromic substance(s), e.g., by trapping them in either an open or closed form. Photochromic substances can also include photochromic pigments and organic photochromic substances encapsulated in metal oxides, the latter of which are described in U.S. Patents 4,166,043 and 4,367,170. Organic photochromic substances sufficiently encapsulated within a matrix of an organic polymerizate, as described in U.S. Patent 4,931,220, may also be incorporated into the two-component composition of the present invention prior to curing. If photochromic substances are added to the two-component organic composition of the present invention prior to curing, they are typically incorporated into the second component prior to mixing the first and second components together.

### EXAMPLE 1

Thioglycerol bis(2-mercaptoacetate) is a preferred polythiol monomer of the present invention, in which R₁ and R₂ are each methylene with reference to general formula I. Thioglycerol bis(2-mercaptoacetate) was prepared from the following ingredients.

| Ingredient | Amount (grams) |
|---|---|
| Charge 1 | |
| 3-mercapto-1,2-propanediol | 1995 |
| 2-mercaptoacetic acid | 2333 |
| methane sulfonic acid | 14.2 |

| Charge 2 | |
|---|---|
| aqueous ammonia (a) | 4218 |

| | |
|---|---|
| (a) An aqueous solution of 5 % by weight ammonia. | |

The ingredients of Charge 1 were added to a five liter round bottom flask equipped with a magnetic stirrer, a thermocouple and heating mantle coupled through a temperature feed-back control device, and a vacuum distillation column. A vacuum of from 5 to 10 millimeters (mm) of Hg was drawn and the reaction mixture was heated to and held at 70°C for a period of 4 to 5 hours while water was collected from the distillation column.

When no more water was observed to be collected from the distillation column, the reaction mixture was cooled to room temperature and transferred to a six liter round bottom flask equipped with a motor driven stir-blade, a thermocouple and a water cooled jacket. Charge 2 was added to the mixture, which was then stirred for 30 to 45 minutes with an accompanying exotherm of from 10°C to 20°C. Upon cooling to room temperature, the reaction mixture was left standing to allow the accumulation of an upper ammonia layer, which was removed by suctioning with a pipette. The remaining lower layer was washed three times each with two liters of deionized water. Vacuum stripping of water from the washed layer yielded 1995 grams of thioglycerol bis(2-mercaptoacetate) in the form of a yellowish oil having a refractive index of 1.5825.

### EXAMPLES 2-10

A polyisocyanate was mixed with a polythiol and in some examples also a polyol at 80°C for 2 hours to yield a viscous liquid prepolymer first component. The warm prepolymer first component was rapidly stirred and a diamine second component was added thereto. After the mixture stirred for several seconds, the mixture was immediately charged between two flat glass molds. The filled molds were heated to 120°C and maintained at that temperature for 16 hours, yielding a plastic sheet. The polyisocyanates used in the examples were α,α'-xylene diisocyanate (XDI), α,α,α',α'-tetramethylxylene diisocyanante (TMXDI), and bis(isocyanatocyclohexyl)methane (H-MDI). The dithiol and polyols were 2,2'-thiodiethanethiol (DMDS) and trimethylolpropane (TMP), Tone® Polyol 32B8 (UC32B8), and Tone® Polyol 32C8 (UC32C8); Tone® Polyols obtained from Union Carbide Corporation, Danbury, Connecticut. The polyamine second component was diethyltoluenediamine (DETDA). The specific molar composition and molar ratio of each component used for each example are summarized in Table 1. Measured physical properties for each example are summarized in Table 2.

### EXAMPLE 11

A first component was prepared by mixing 0.6 equivalents of H-MDI with 1 equivalent of DMDS at 90°C for an hour. While stirring, 0.6 equivalents of XDI were added to the first component. The mixture was allowed to stir for an additional 1.5 hours to yield the viscous prepolymer. 0.25 equivalents of DETDA were added to the warm prepolymer. After stirring for several seconds, the resulting mixture was charged between two flat glass molds. The filled molds were heated to 120°C and maintained at that temperature for 16 hours, yielding a plastic sheet.

**Table 1**

| Example No. | Notebook No. | -NCO composition | -SH + -OH composition | NCO/ (SH + OH) | NH₂ / NCO |
|---|---|---|---|---|---|
| 2 | 8247-118 | TMXDI | DMDS | 1.2 | 0.95 |
| 3 | 8247-120 | TMXDI | DMDS | 2.6 | 0.95 |
| 4 | 8247-119 | TMXDI | DMDS | 4.0 | 0.95 |
| 5 | 8247-125-26 | TMXDI | DMDS | 2.6 | 0.4 |
| 6 | 8247-111 | XDI | DMDS | 1.2 | 0.95 |
| 7 | 8247-109 | H-MDI | DMDS | 1.2 | 0.95 |
| 8 | 8247-112 | XDI | 75% DMDS 25% UC32B8 | 1.2 | 0.95 |
| 9 | 8247-113 | XDI | 75% DMDS 25% UC32C8 | 1.2 | 0.95 |
| 10 | 8247-107 | H-MDI | 85% DMDS 15% TMP | 1.2 | 0.95 |
| 11 | 8247-123 | 50% XDI 50% H-MDI | DMDS | 1.2 | 0.25 |

**Table 2**

| Example No. | ND (AR¹) | ND (PLM²) | Abbe (AR¹) | Abbe (PLM²) | Barcol 934 (0-15 sec) |
|---|---|---|---|---|---|
| 2 | 1.604 | 1.604 | 33 | 32 to 38 | 41-39 |
| 3 | - | 1.585 | - | 31 to 39 | - |
| 4 | - | 1.578 | - | 30 to 39 | |
| 5 | 1.582 | - | 33 | - | 41-40 |
| 6 | - | 1.62<n<1.63 | - | - | - |
| 7 | - | 1.577 | - | 32 to 42 | - |
| 8 | - | 1.600 | - | 30 to 51 | - |
| 9 | - | 1.576 | - | 29 to 58 | - |
| 10 | 1.571 | 1.570 | 41 | 41 to 58 | - |
| 11 | 1.610 | - | 35 | - | 37-34 |

| | | | | | |
|---|---|---|---|---|---|
| ¹ measured using a B&L Abbe refractometer (AR) | | | | | |
| ² measured using a polarized light microscope (PLM) | | | | | |

The examples demonstrate the excellent high refractive index, high Abbe number and hardness (impact resistance) of the polymerizate of the present invention.

The invention has been described with reference to the preferred embodiments. Obvious modifications and alterations will occur to others upon reading and understanding the detailed description. It is intended that the invention be construed as including all such modifications and alterations insofar as they come within the scope of appended claims or the equivalents thereof.

## Claims

1. A method of preparing a polymerizate comprising the step of polymerizing a two-component composition comprised of:
(a) a first component containing at least one polycyanate reactant having at least two functional groups selected from isocyanate, isothiocyanate and combinations thereof, the polycyanate reactant being the reaction product of,
(i) a polythiol monomer having at least two thiol groups: and
(ii) a polycyanate monomer having at least two functional groups selected from isocyanate, isothiocyanate and combinations thereof; and
(b) a second component containing at least one polyamine reactant having at least two functional groups selected from primary amine, secondary amine and combinations thereof; wherein the molar equivalent ratio of (NCO + NCS) groups from said first component to (-NH₂ + -NH-) groups from said second component is from 0.5 to 100.

2. The method of claim 1 wherein said first component further comprises
(iii) a reactive hydrogen material having at least two reactive hydrogen groups, the reactive hydrogen material being selected from the group consisting of polyols and materials having both hydroxyl and thiol groups: and mixtures thereof.

3. The method of claim 1 wherein the relative amounts of (i) and (ii) in said first component are selected such that the molar equivalents ratio of (NCO + NCS)/(SH) is greater than 1.0.

4. The method of claim 2 wherein the relative amounts of (i), (ii) and (iii) being in said first component are selected such that the molar equivalents ratio of (NCO + NCS)/(SH + OH) is greater than 1.0.

5. The method of any of claims 1 to 4 wherein said first component and said second component are selected such that when they are polymerized, the resulting polymerizate has a refractive index of at least 1.57, an Abbe number of at least 30 and an initial Barcol hardness of at least 1.

6. The method of claim 4 wherein the relative amounts of (i), (ii) and (iii) are selected such that the molar equivalents ratio of (NCO + NCS)/(SH + OH) is from 1.2:1.0 to 4.0:1.0.

7. The method of any of claims 1 to 6 wherein said polythiol monomer is selected from the group consisting of 2,5-dimercaptomethyl-1,4-dithiane, 2.2'-thiodiethanethiol, pentaerythritol tetrakis(3-mercaptopropionate), pentaerythritol tetrakis(2-mercaptoacetate), trimethylolpropane tris(3-mercaptopropionate), trimethylolpropane tris(2-mercaptoacetate), 4-mercaptomethyl-3,6-dithia-1.8-octanedithiol, 4-tert-butyl-1,2-benzenedithiol, 4,4'-thiodibenzenethiol, benzenedithiol, ethylene glycol di(2-mercaptoacetate), ethylene glycol di(3-mercaptopropionate), poly(ethylene glycol) di(2-mercaptoacetate) and poly(ethylene glycol) di(3-mercaptopropionate), a polythiol represented by the general formula: 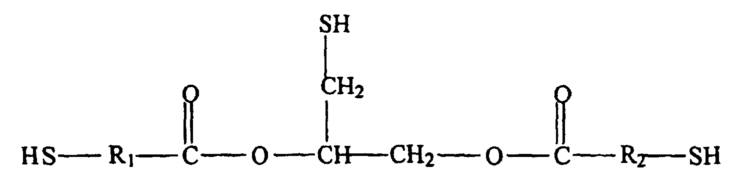 wherein R₁ and R₂ are each independently selected from straight or branched chain alkylene, cyclic alkylene, phenylene and C1-C9 alkyl substituted phenylene, and oligomers of said polythiols; and mixtures of said polythiol monomers.

8. The method of claim 7, wherein said polythiol oligomer has disulfide linkages and is prepared by reacting a polythiol monomer, with sulfur, in the presence of a basic catalyst.

9. The method of claim 7 wherein said polythiol oligomer is represented by the general formula: 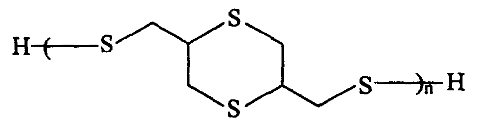 wherein n is an integer from 1 to 21.

10. The method of claim 7 wherein said polythiol oligomer is represented by the general formula: 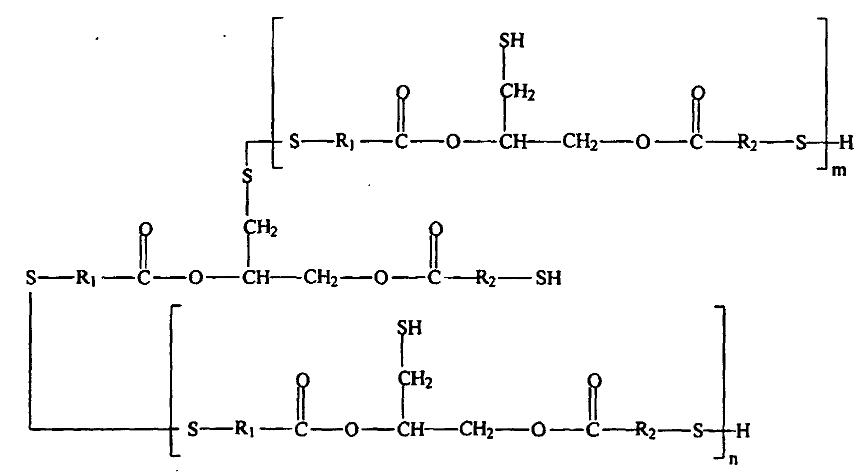 wherein R₁ and R₂ are each independently selected from straight or branched chain alkylene, cyclic alkylene, phenylene and C₁-C₉ alkyl substituted phenylene and n and m are independently integers from 0 to 21 such that n + m is at least 1.

11. The method of any of claims 1 to 10 wherein said polycyanate monomer is a polycyanate having at least two isocyanate groups.

12. The method of any of claims 1 to 10 wherein said polycyanate monomer is a polycyanate having one or more sulfur atoms in its backbone.

13. The method of claim 12 wherein the polycyanate monomer having one or more sulfur atoms in its backbone is one having the general structure: 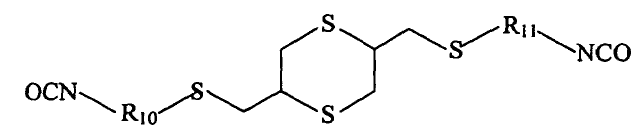 wherein R₁₀ and R₁₁ are each independently C₁ to C₃ alkyl.

14. The method of claim 11 wherein said polycyanate monomer is selected from the group consisting of α,α'-xylene diisocyanate, α,α,α',α'-tetramethylxylene diisocyanate, isophorone diisocyanate, bis(isocyanatocyclohexyl)methane, ortho-toluidine diisocyanate, ortho-tolylidine diisocyanate, ortho-tolylene diisocyanate and 4,4'-diphenylmethane diisocyanate, and mixtures of said polycyanate monomers.

15. The method of any of claims 1 to 14 wherein said polyamine reactant of said second component is selected from the group consisting of ethyleneamines, C1-C3 dialkyl toluenediamine, methylene dianiline, trimethyleneglycol di(para-aminobenzoate), a diamine represented by the general formula (A): 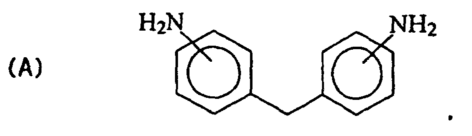 a diamine represented by the general formula (B): 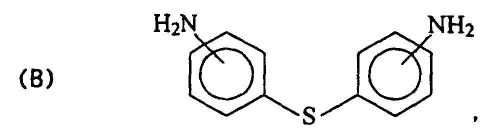 and a diamine represented by the general formula (C):

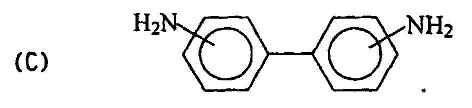

16. The method of claim 15 wherein the diamine of general formula (A) is selected from one or more of the group consisting of: 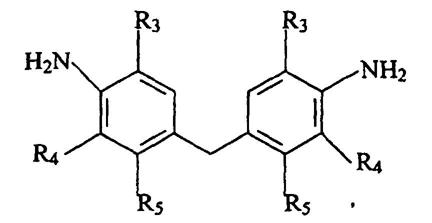 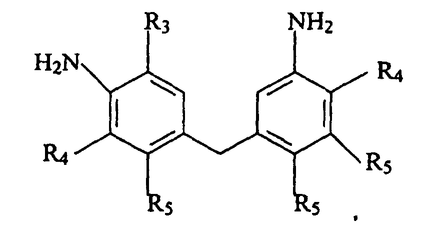 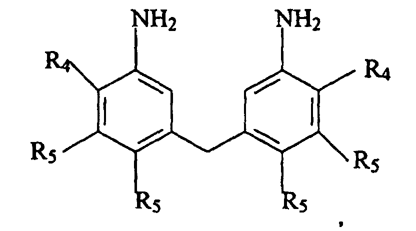 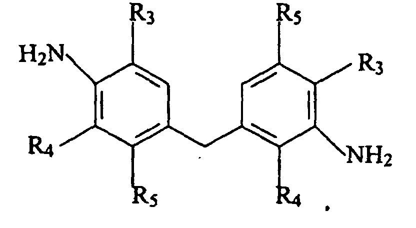 and 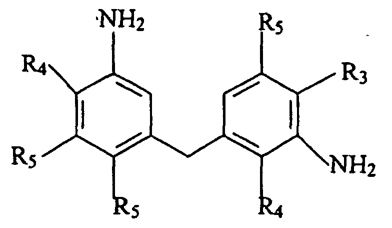 wherein R₃ and R₄ are each independently C₁-C₃ alkyl, and R₅ is selected from hydrogen and halogen, and mixtures of said diamines.

17. The method of claim 15 wherein the diamine of general formula (B) is selected from one or more of the group consisting of: 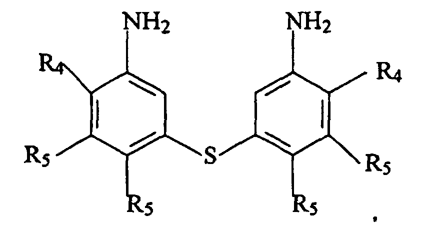 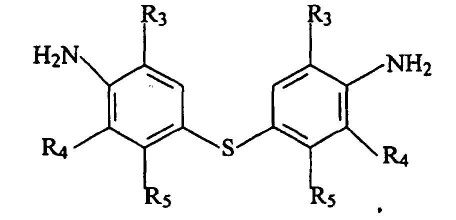 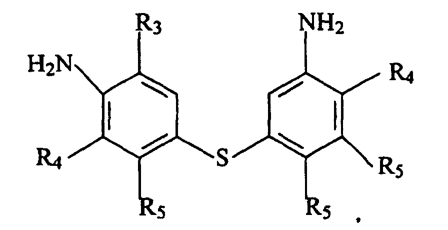 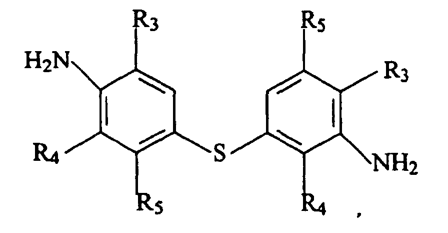 and 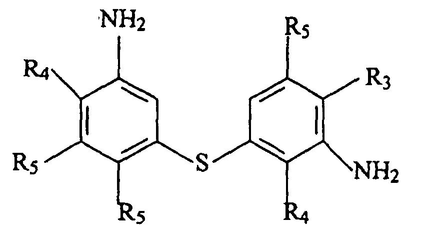 wherein R₃ and R₄ are each independently C₁-C₃ alkyl, and R₅ is selected from hydrogen and halogen, and mixtures of said diamines.

18. The method of claim 15 wherein the diamine of general formula (C) is selected from one or more of the group consisting of: 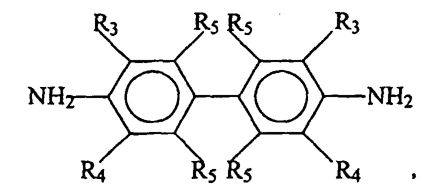 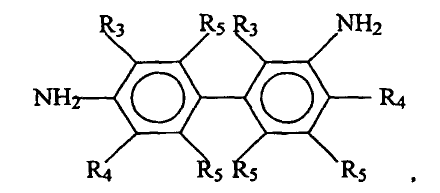 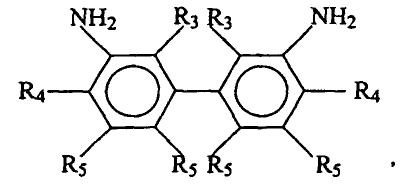 and 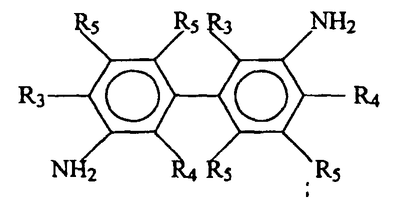 wherein R₃ and R₄ are each independently C₁-C₃ alkyl, and R₅ is selected from hydrogen and halogen, and mixtures of said diamines.

19. The method of any of claims 1 to 18 wherein said polyamine reactant of said second component is a diamino toluene dialkyl sulfide.

20. The method of claim 19 wherein said diamino toluene dialkyl sulfide is a 2,6 diaminotoluene-3,5-dialkyl sulfide of the general formula: 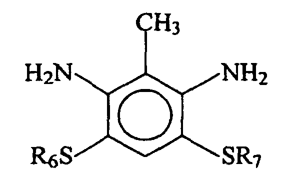 wherein R₆ and R₇ are linear, branched or cyclic C₁ to C₂₀ alkyl.

21. The method of any of claims 1 to 20 further comprising the step of adding a catalyst to said two-component composition.

22. The method of claim 21 wherein said catalyst is selected from the group consisting of tertiary amines and organometallic compounds.

23. The method of any of claims 1 to 22 further comprising the step of:
mixing said first component and said second component.

24. The method of any of claims 1 to 23 further comprising the step of:
degassing said first component.

25. The method of any of claims 1 to 24 further comprising the step of:
degassing said second component.

26. The method of claim 23 further comprising the step of:
adding the mixture to a mold.

27. The method of claim 26 further comprising the step of:
heating the mold and the mixture of said first component and said second component within it.

28. The method of claim 27 wherein said heating step further includes heating the mold and said mixture to a temperature of from 100°C to 140°C over a period of from 0.5 to 16 hours.

29. The method of any of claims 1 to 28 wherein said first component and said second component are polymerized together in amounts sufficient to provide a molar equivalent ratio of (NCO + NCS) groups to (-NH₂ + -NH-) groups of from 0.5 to 10.

30. The method of claim 29 wherein said first component and said second component are polymerized together in amounts sufficient to provide a molar equivalent ratio of (NCO + NCS) groups to (-NH₂ + -NH-) groups of from 0.5 to 5.

31. The method of any of claims 1 to 30 further comprising the step of adding additives selected from the group consisting of light stabilizers, heat stabilizers, antioxidants, ultraviolet light absorbers, mold release agents, static (non-photochromic) dyes, pigments and flexibilizing additives and anti-yellowing additives; and mixtures of said additives.

32. The method of claim 31 wherein the additives are present in said two component composition, in an amount up to 10% by weight of said two component composition.

33. The method of claim 31 or 32 wherein the mold release agent is a C₈ to C₁₆ alkyl phosphate ester.

34. The method of any of claims 1 to 33 wherein said polymerizate further comprises a photochromic substance.

35. A polymerizate obtainable by a method according to any of claims 1 to 34.

36. A photochromic article derived from a polymerizate according to claim 35 comprising a photochromic substance.

37. The photochromic article of claim 36 wherein the photochromic substance is mixed with said first component.

38. The photochromic article of claim 36 wherein the photochromic substance is mixed with said second component.

39. The photochromic article of any of claims 36 to 38 wherein the photochromic substance is applied to said photochromic article at from 0.15 to 0.35 milligrams per square centimeter of surface area of said photochromic article.

40. The photochromic article of any of claims 36 to 39 wherein said photochromic substance is selected from the group consisting of spiro(indoline)naphthoxazines, spiro(indoline)benzoxazines, chromenes, benzopyrans, naphthopyrans, organo-metal dithizonates, (arylazo)-thioformic arylhydrazidates, mercury dithizonates, fulgides, fulgimides, 3-furyl fulgides, 3-thienyl fulgides, 3-furyl fulgimides and 3-thienyl fulgimide; and mixtures of said photochromic substances.

41. The photochromic article of any of claims 36 to 40 wherein the photochromic substance has an activated absorption maximum within the visible range of from 400 to 500 nanometers.

42. The photochromic article of any of claims 36 to 40 wherein the photochromic substance has an activated absorption maximum within the visible range of from 500 to 700 nanometers.

43. The photochromic article of claim 42 wherein the photochromic substance has an activated absorption maximum within the visible range of from 590 to 700 nanometers.

44. The photochromic article of any of claims 36 to 43 wherein the photochromic substance is applied or incorporated into said photochromic article using a method selected from the list consisting of cast curing, encapsulating within a matrix of an organic polymerizate and incorporating into the two-component composition prior to curing.

45. The photochromic article of any of claims 36 to 44 wherein the photochromic substance is applied by imbibing the photochromic article such that permeation of the photochromic substance into the polymerizate is achieved.

46. The photochromic article of claim 45 wherein the imbibing process includes solvent assisted transfer absorption.

47. The photochromic article of claim 45 wherein the imbibing process includes vapor phase transfer.

48. The photochromic article of any of claims 36 to 47 wherein the photochromic substance is applied as a coating to the surface of the photochromic article.

49. The photochromic article of claims 45 to 48 wherein the imbibing process includes the steps of:
coating the photochromic article with the photochromic substance; heating the surface of the photochromic article: and
removing the residual coating from the surface of the photochromic article.

50. The photochromic article of any of claims 36 to 49 wherein the photochromic article is an optical lens for correcting a visual defect.

51. The method of any of claims 1 to 34, the polymerizate of claim 35 or the photochromic article of any of claims 36 to 50 wherein the polymerization of said first component and said second component is carried out by reaction injection molding, wherein said first component and said second component are each metered from a cylinder through a mixing head and injected into a molding machine.

## Patentansprüche

1. Ein Verfahren zum Herstellen eines Polymerisats, umfassend den Schritt der Polymerisierung einer Zweikomponentenzusammensetzung, die enthält:
(a) eine erste Komponente, welche wenigstens einen Polycyanat-Reaktionspartner enthält, der wenigsten zwei funktionelle Gruppen, ausgewählt aus Isocyanat, Isothiocyanat und Kombinationen daraus hat, wobei der Polycyanat-Reaktionspartner das Produkt der Reaktion von
(i) einem Polythiolmonomer mit wenigstens zwei Thiolgruppen, und
(ii) einem Polycyanatmonomer mit wenigstens zwei funktionellen Gruppen, ausgewählt aus Isocyanat, Isothiocyanat und Kombinationen daraus ist, und
(b) einer zweiten Komponente, enthaltend wenigstens einen Polyamin-Reaktionspartner mit wenigstens zwei funktionellen Gruppen, ausgewählt aus einem primären Amin, sekundären Amin und Kombinationen daraus, wobei das molare Äquivalentenverhältnis von (NCO + NCS)-Gruppen der ersten Komponente zu (-NH₂ + -NH-)-Gruppen der zweiten Komponente von 0,5 bis 100 ist.

2. Das Verfahren gemäß Anspruch 1, wobei die erste Komponente außerdem enthält
(iii) ein reaktives Wasserstoffmaterial mit wenigsten zwei reaktiven Wasserstoffgruppen, wobei das reaktive Wasserstoffmaterial ausgewählt ist aus der Gruppe, bestehend aus Polyolen und Materialien, die sowohl Hydroxyl- als auch Thiolgruppen haben, und Mischungen daraus.

3. Das Verfahren gemäß Anspruch 1, worin die relativen Mengen von (i) und (ii) in dieser ersten Komponente so ausgewählt sind, dass das molare Äquivalentenverhältnis von (NCO + NCS)/SH größer als 1,0 ist.

4. Das Verfahren gemäß Anspruch 2, worin die relativen Mengen von (i), (ii) und (iii) in dieser ersten Komponente so ausgewählt sind, dass das molare Äquivalentenverhältnis von (NCO + NCS)/(SH + OH) größer als 1,0 ist.

5. Das Verfahren gemäß einem der Ansprüche 1 bis 4, worin diese erste Komponente und diese zweite Komponente so ausgewählt sind, dass das sich ergebende Polymerisat, wenn sie polymerisiert sind, einen Refraktionsindex von wenigstens 1,57 hat, eine Abbe-Zahl von wenigstens 30 und eine initale Barcol-Härte von wenigstens 1.

6. Das Verfahren gemäß Anspruch 4, worin die relativen Mengen von (i), (ii) und (iii) so ausgewählt sind, dass das molare Äquivalentenverhältnis von (NCO + NCS)/(SH + OH) von 1,2 : 1,0 bis 4,0 : 1,0 ist.

7. Das Verfahren gemäß einem der Ansprüche 1 bis 6, wobei das Polythiolmonomer ausgewählt ist aus der Gruppe bestehend aus 2,5-Dimercaptomethyl-1.4-dithian, 2,2'-Thiodiethanthiol, Pentaerythritoltetrakis(3-mercaptopropionat), Pentaerythritoltetrakis(2-mercaptoacetat), Trimethylolpropantris(3-mercaptopropionat), Trimethylolpropantris(2-mercaptoacetat), 4-Mercaptomethyl-3,6-dithia-1,8-octandithiol, 4-tert-Butyl-1,2-benzoldithiol, 4,4'-Thiodibenzolthiol, Benzoldithiol, Ethylenglycoldi(2-mercaptoacetat), Ethylenglycoldi(3-mercaptopropionat), Poly(ethylenglycol)di(2-mercaptoacetat) und Poly(ethylenglycol)di(3-mercaptopropionat), einem Polythiol, dargestellt durch die allgemeine Formel: 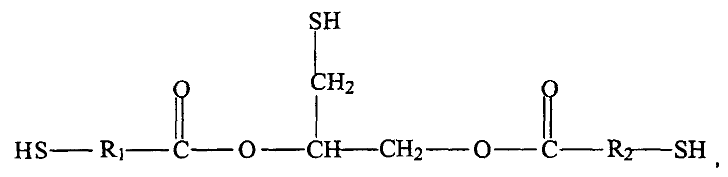 worin R₁ und R₂ jeweils unabhängig voneinander ausgewählt sind aus einem geraden oder verzweigtkettigen Alkylen, cyclischem Akylen, Phenylen und C₁-C₉-alkylsubstituiertem Phenylen und Oligomeren dieser Polythiole, und Mischungen dieser Polythiolmonomeren.

8. Das Verfahren gemäß Anspruch 7, wobei das Polythiololigomer Disulfidverknüpfungen hat und durch die Reaktion eines Polythiolmonomers mit Schwefel in Gegenwart eines basischen Katalysators hergestellt wurde.

9. Das Verfahren gemäß Anspruch 7, wobei das Polythiololigomer durch die folgende allgemeine Formel dargestellt wird: 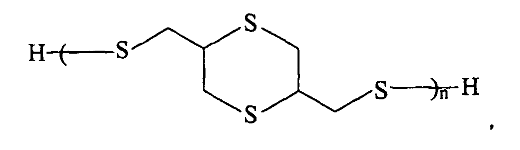 worin n eine ganze Zahl von 1 bis 21 ist.

10. Das Verfahren gemäß Anspruch 7, wobei das Polythiololigomer durch die allgemeine Formel dargestellt ist: 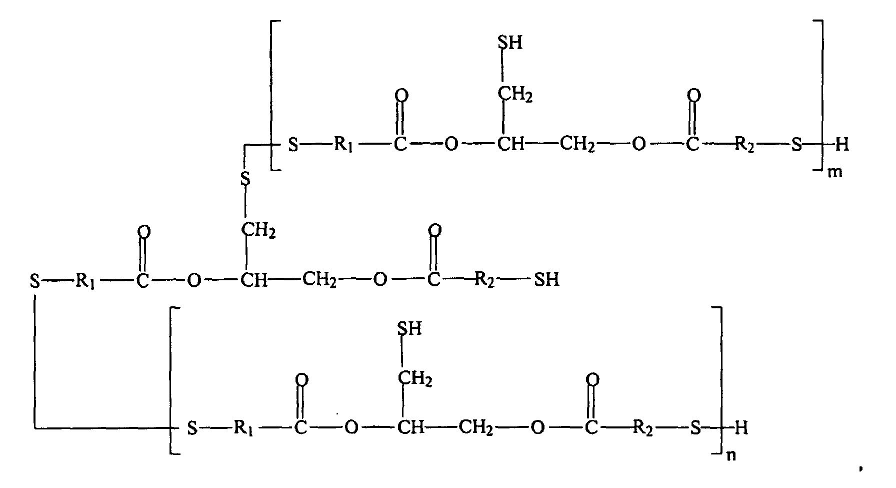 worin R₁ und R₂ jeweils unabhängig voneinander ausgewählt sind aus einem geraden oder verzweigtkettigen Alkylen, cyklischen Alkylen, Phenylen und C₁-C₉-alkylsubstituiertem Phenylen und n und m unabhängig voneinander ganze Zahlen von 0 bis 21 sind, so dass n + m wenigstens 1 ist.

11. Das Verfahren gemäß einem der Ansprüche 1 bis 10, wobei das Polycyanatmonomer ein Polycyanat mit wenigstens zwei Isocyanatgruppen ist.

12. Das Verfahren gemäß einem der Ansprüche 1 bis 10, wobei das Polycyanatmonomer ein Polycyanat mit einem oder mehreren Schwefelatomen in seinem Rückgrat ist.

13. Das Verfahren gemäß Anspruch 12, wobei das Polycyanatmonomer mit einem oder mehreren Schwefelatomen in seinem Rückgrat eines ist, das die allgemeine Struktur hat: 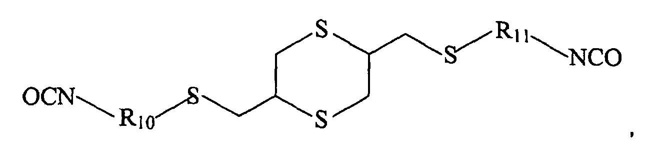 worin R₁₀ und R₁₁ jeweils unabhängig voneinander C₁-C₃-Alkyl ist.

14. Das Verfahren gemäß Anspruch 11, wobei das Polycyanatmonomer ausgewählt ist aus der Gruppe bestehend aus α,α'-Xylendiisocyanat, α,α,α',α'-Tetramethylxylendiisocyanat, Isophorondiisocyanat, Bis(isocyanatocyclohexyl)methan, Ortho-toluidindiisocyanat, Orthotolylidindiisocyanat, Ortho-tolylendiisocyanat und 4,4'-Diphenylmethandiisocyanat, und Mischungen dieser Polycyanatmonomeren.

15. Das Verfahren gemäß einem der Ansprüche 1 bis 14, wobei der Polyamin-Reaktionspartner der zweiten Komponente ausgewählt ist aus der Gruppe, bestehend aus Ethylenaminen, C₁-C₃-Dialkyltoluoldiamin, Methylendianilin, Trimethylenglycoldi(para-aminobenzoat), einem Diamin, dargestellt durch die allgemeine Formel (A): 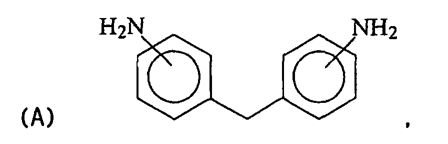 einem Diamin, dargestellt durch die allgemeine Formel (B): 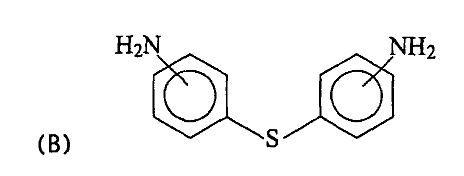 und einem Diamin, dargestellt durch die allgemeine Formel (C):

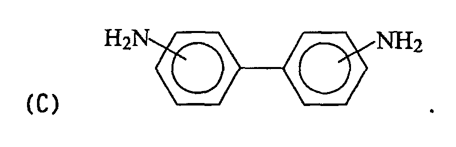

16. Das Verfahren gemäß Anspruch 15, wobei das Diamin der allgemeinen Formel (A) ausgewählt ist aus einem oder mehreren der Gruppe, bestehend aus: 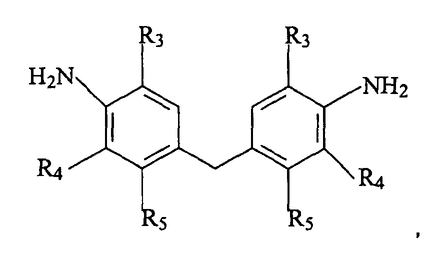 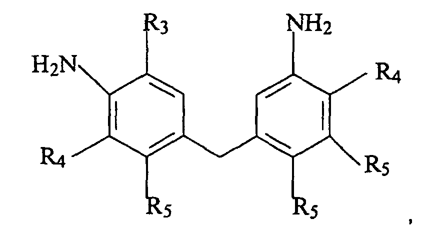 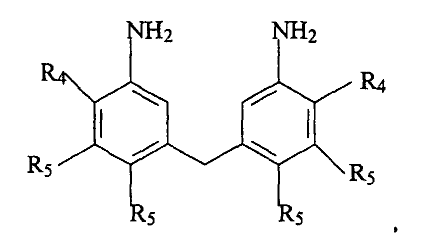 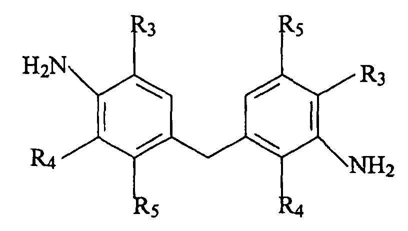 und 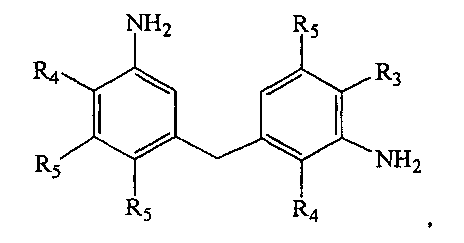 worin R₃ und R₄ jeweils unabhängig voneinander C₁-C₃-Alkyl ist und R₅ ausgewählt ist aus Wasserstoff und Halogen, und Mischungen dieser Diamine.

17. Das Verfahren gemäß Anspruch 15, wobei das Diamin der allgemeinen Formel (B) ausgewählt ist aus einem oder mehreren der Gruppe, bestehend aus: 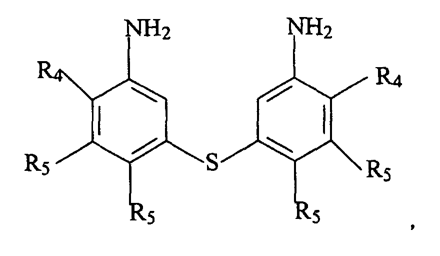 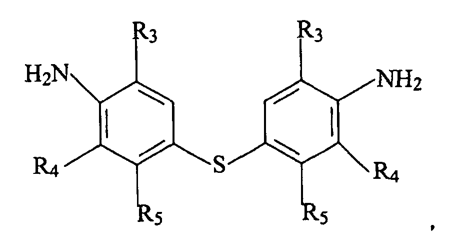 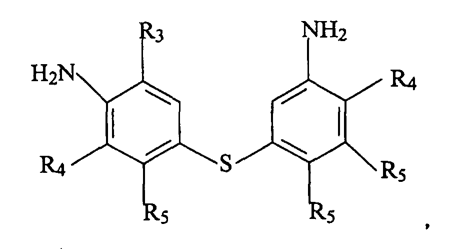 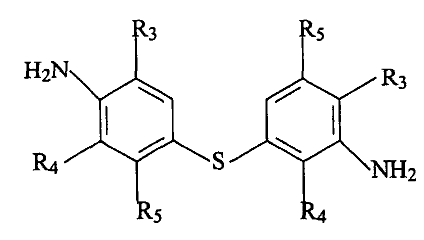 und 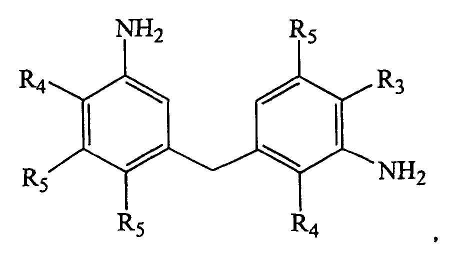 worin R₃ und R₄ jeweils unabhängig voneinander C₁-C₃-Alkyl ist und R₅ ausgewählt ist aus Wasserstoff und Halogen, und Mischungen dieser Diamine.

18. Das Verfahren gemäß Anspruch 15, wobei das Diamin der allgemeinen Formel (C) ausgewählt ist aus einem oder mehreren der Gruppe, bestehend aus: 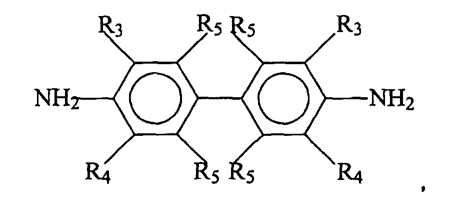 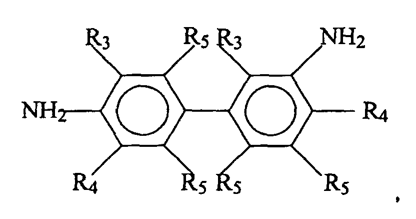 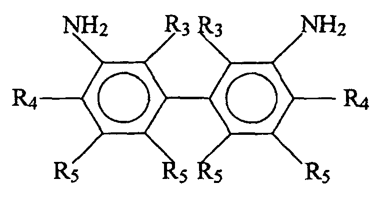 und 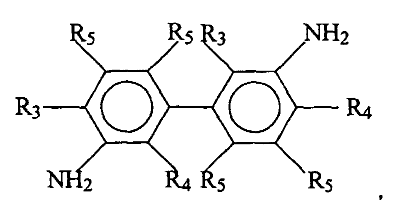 wobei R₃ und R₄ jeweils unabhängig voneinander C₁-C₃-Alkyl ist und R₅ ausgewählt ist aus Wasserstoff und Halogen, und Mischungen dieser Diamine.

19. Das Verfahren gemäß einem der Ansprüche 1 bis 18, wobei der Polyamin-Reaktionspartner der zweiten Komponente ein Diaminotoluoldialkylsulfid ist.

20. Das Verfahren gemäß Anspruch 19, wobei das Diaminotoluoldialkylsulfid ein 2,6-Diaminotoluol-3,5-dialkylsulfid der allgemeinen Formel: 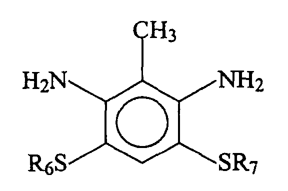 ist, worin R₆ und R₇ ein lineares, verzweigtes oder cyklisches C₁- bis C₂₀-Alkyl ist.

21. Das Verfahren gemäß einem der Ansprüche 1 bis 20, außerdem enthaltend einen Schritt der Zugabe eines Katalysators zu besagter Zweikomponentenzusammensetzung.

22. Das Verfahren gemäß Anspruch 21, wobei dieser Katalysator ausgewählt ist aus der Gruppe bestehend aus tertiären Aminen und organometallischen Verbindungen.

23. Das Verfahren gemäß einem der Ansprüche 1 bis 22, außerdem enthaltend den Schritt: Mischen der ersten Komponente und der zweiten Komponente.

24. Das Verfahren gemäß irgendeinem der Ansprüche 1 bis 23, außerdem enthaltend den Schritt: Entgasen der ersten Komponente.

25. Das Verfahren gemäß irgendeinem der Ansprüche 1 bis 24, außerdem enthaltend den Schritt: Entgasen der zweiten Komponente.

26. Das Verfahren gemäß Anspruch 23, außerdem enthaltend den Schritt:
Zugabe der Mischung in eine Form.

27. Das Verfahren gemäß Anspruch 26, außerdem enthaltend den Schritt:
Erwärmen der Form und der Mischung der ersten Komponente und der zweiten Komponente innerhalb der Form.

28. Das Verfahren gemäß Anspruch 27, wobei der Erwärmungsschritt außerdem das Erwärmen der Form und der Mischung auf eine Temperatur von 100°C bis 140°C über eine Zeitdauer von 0,5 bis 16 Stunden einschließt.

29. Das Verfahren gemäß einem der Ansprüche 1 bis 28, wobei die erste Komponente und die zweite Komponente zusammen in Mengen polymerisiert werden, die ausreichen, um ein molares Äquivalentenverhältnis von (NCO + NCS)-Gruppen zu (-NH₂ + -NH-)-Gruppen von 0,5 bis 10 bereitzustellen.

30. Das Verfahren gemäß Anspruch 29, wobei die erste Komponente und die zweite Komponente zusammen in Mengen polymerisiert werden, die ausreichen, um ein molares Äquivalentenverhältnis von (NCO + NCS)-Gruppen zu (-NH₂ + -NH-)-Gruppen von 0,5 bis 5 bereitzustellen.

31. Das Verfahren gemäß einem der Ansprüche 1 bis 30, außerdem enthaltend den Schritt einer Zugabe von Additiven, ausgewählt aus der Gruppe, bestehend aus Lichtstabilisatoren, Hitzestabilisatoren, Antioxidantien, Ultraviolettlichtabsorbern, Trennmitteln, statischen (nicht-photochromen) Farbstoffen, Pigmenten und flexibilisierenden Additiven und Additiven gegen die Gelbfärbung, und Mischungen dieser Additive.

32. Das Verfahren gemäß Anspruch 31, wobei die Additive in dieser Zweikomponentenzusammensetzung in einer Menge von bis zu 10 Gew.-% der Zweikomponentenzusammensetzung vorliegen.

33. Das Verfahren gemäß Anspruch 31 oder 32, wobei das Trennungsmittel ein C₈- bis C₁₆-Alkylphosphatester ist.

34. Das Verfahren gemäß einem der Ansprüche 1 bis 33, wobei das Polymerisat außerdem eine photochrome Substanz enthält.

35. Ein Polymerisat, erhältlich durch ein Verfahren gemäß einem der Ansprüche 1 bis 34.

36. Ein photochromer Artikel, erhalten aus einem Polymerisat gemäß Anspruch 35, der eine photochrome Substanz enthält.

37. Der photochrome Artikel gemäß Anspruch 36, worin die photochrome Substanz mit der ersten Substanz gemischt ist.

38. Der photochrome Artikel gemäß Anspruch 36, worin die photochrome Substanz mit der zweiten Komponente gemischt ist.

39. Der photochrome Artikel gemäß einem der Ansprüche 36 bis 38, wobei die photochrome Substanz auf den photochromen Artikel mit von 0,15 bis 0.35 mg je cm² Oberfläche dieses photochromen Artikels auf diesen photochromen Artikel aufgetragen ist.

40. Der photochrome Artikel gemäß einem der Ansprüche 36 bis 39, wobei die photochrome Substanz ausgewählt ist aus der Gruppe bestehend aus Spiro(indolin)naphthoxazinen, Spiro(indolin)benzoxazinen, Chromenen, Benzopyranen, Naphthopyranen, Organometalldithizonaten, (Arylazo)-Thioameisensäure-Arylhydrazidaten, Quecksilberdithizonaten, Fulgiden, Fulgimiden, 3-Furylfulgiden, 3-Thienylfulgiden, 3-Furylfulgimiden and 3-Thienylfulgimiden und Mischungen dieser photochromen Substanzen.

41. Der photochrome Artikel gemäß einem der Ansprüche 36 bis 40, wobei die photochrome Substanz ein aktiviertes Absorptionsmaximum innerhalb des sichtbaren Bereichs von 400 bis 500 Nanometern hat.

42. Der photochrome Artikel gemäß einem der Ansprüche 36 bis 40, wobei die photochrome Substanz ein aktiviertes Absorptionsmaximum innerhalb des sichtbaren Bereichs von 500 bis 700 Nanometern hat.

43. Der photochrome Artikel gemäß Anspruch 42, wobei die photochrome Substanz ein aktiviertes Absorptionsmaximum innerhalb des sichtbaren Bereichs von 590 bis 700 Nanometern hat.

44. Der photochrome Artikel gemäß einem der Ansprüche 36 bis 43, wobei die photochrome Substanz auf den photochromen Artikel aufgebracht oder in diesen eingearbeitet ist, unter Verwendung eines Verfahrens, ausgewählt aus der Liste bestehend aus Gusshärten. Verkapseln innerhalb einer Matrix eines organischen Polymerisats und Einarbeiten in die Zweikomponentenzusammensetzung vor dem Härten.

45. Der photochrome Artikel gemäß einem der Ansprüche 36 bis 44, wobei die photochrome Substanz durch Aufsaugen der Substanz in den photochromen Artikel aufgebracht wird, so dass die Permeation der photochromen Substanz in das Polymerisat erreicht wird.

46. Der photochrome Artikel gemäß Anspruch 45, wobei der Prozess des Aufsaugens eine durch Lösemittel unterstützte Transferabsorption einschließt.

47. Der photochrome Artikel gemäß Anspruch 45, wobei der Prozess des Aufsaugens einen Dampfphasentransfer einschließt.

48. Der photochrome Artikel gemäß einem der Ansprüche 36 bis 47, wobei die photochrome Substanz als eine Beschichtung auf die Oberfläche des photochromen Artikels aufgetragen wird.

49. Der photochrome Artikel gemäß einem der Ansprüche 45 bis 48, wobei der Prozess des Aufsaugens die Schritte umfasst:
Beschichten des photochromen Artikels mit der photochromen Substanz,
Erwärmen der Oberfläche des photochromen Artikels, und
Entfernen der verbleibenden Beschichtung von der Oberfläche des photochromen Artikels.

50. Der photochrome Artikel gemäß einem der Ansprüche 36 bis 49, wobei der photochrome Artikel eine optische Linse für die Korrektur eines visuellen Defektes ist.

51. Das Verfahren gemäß einem der Ansprüche 1 bis 34, das Polymerisat gemäß Anspruch 35 oder der photochrome Artikel gemäß einem der Ansprüche 36 bis 50, wobei die Polymerisierung der ersten Komponente und der zweiten Komponente durch Reaktionsinjektionsformung durchgeführt wird, wobei die erste Komponente und die zweite Komponente jeweils aus einem Zylinder durch einen Mischkopf hindurch geführt werden und in eine Formmaschine eingespritzt werden.

## Revendications

1. Procédé de préparation d'un polymère comprenant l'étape de polymérisation d'une composition à deux composants composée de :
(a) un premier composant contenant au moins un réactif à base de polycyanate ayant au moins deux groupes fonctionnels choisis parmi les groupes isocyanate, isothiocyanate et des combinaisons de ceux-ci, le réactif à base de polycyanate étant le produit de réaction de,
(i) un monomère à base de polythiol ayant au moins deux groupes thiol, et
(ii) un monomère à base de polycyanate ayant au moins deux groupes fonctionnels choisis parmi les groupes isocyanate, isothiocyanate et des combinaisons de ceux-ci, et
(b) un deuxième composant contenant au moins un réactif à base de polyamine ayant au moins deux groupes fonctionnels choisis parmi une amine primaire, une amine secondaire et des combinaisons de celles-ci, dans lequel la proportion d'équivalent molaire des groupes (NCO + NCS) dudit premier composant par rapport aux groupes (-NH₂ + -NH-) dudit second composant est de 0,5 à 100.

2. Procédé selon la revendication 1 dans lequel ledit premier composant comprend en outre :
(iii) un matériau à hydrogène réactif ayant au moins deux groupes à hydrogène réactif, le matériau à hydrogène réactif étant choisi dans le groupe constitué par des polyols et de matériaux ayant à la fois des groupes hydroxyle et thiol, et des mélanges de ceux-ci.

3. Procédé selon la revendication 1, dans lequel les quantités relatives de (i) et de (ii) dans ledit premier composant sont choisies de manière que la proportion d'équivalents molaires de (NCO + NCS)/(SH) soit supérieure à 1,0.

4. Procédé selon la revendication 2, dans lequel les quantités relatives de (i), (ii) et (iii) dans ledit premier composant sont choisies de manière que la proportion des équivalents molaires de (NCO + NCS) / (SH + OH) soit supérieure à 1,0.

5. Procédé selon l'une quelconque des revendications 1 à 4, dans lequel ledit premier composant et ledit second composant sont choisis de manière que lorsqu'ils sont polymérisés, le polymère résultant présente un indice de réfraction d'au moins 1,57, un nombre Abbe d'au moins 30 et une dureté Barcol initiale d'au moins 1.

6. Procédé selon la revendication 4, dans lequel les quantités relatives de (i), (ii) et (iii) sont choisies de manière que la proportion des équivalents molaires de (NCO + NCS) / (SH + OH) soit de 1,2 : 1,0 à 4,0 : 1,0.

7. Procédé selon l'une quelconque des revendications 1 à 6, dans lequel ledit monomère à base de polythiol est choisi dans le groupe constitué par le 2,5-dimercaptométhyl-1,4-dithiane, le 2,2'-thiodiéthanethiol, le tétrakis(3-mercaptopropionate) de pentaérythritol, le tétrakis(2-mercaptoacétate) de pentaérythritol, le tris(3-mercaptopropionate) de triméthylolpropane, le tris(2-mercaptoacétate) de triméthylolpropane, le 4-mercaptométhyl-3,6-dithia-1,8-octanedithiol, le 4-tert-butyl-1,2-benzènedithiol, le 4,4'-thiodibenzènethiol, le benzènedithiol, le di(2-mercaptoacétate) d'éthylène glycol, le di(3-mercaptopropionate) d'éthylène glycol, du poly(di(2-mercaptoacétate) d'éthylène glycol et du poly(di(3-mercaptopropionate) d'éthylène glycol, un polythiol représenté par la formule générale : 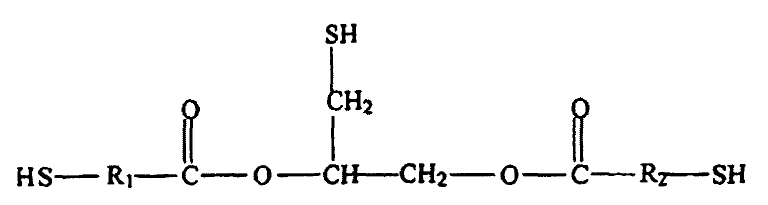 dans laquelle R₁ et R₂ sont chacun choisis, indépendamment l'un de l'autre parmi un alkylène à chaîne linéaire ou ramifiée, un alkylène cyclique, un phénylène et un phénylène substitué par un alkyle en C₁ à C₉, et des oligomères desdits polythiols, et des mélanges desdits monomères à base de polythiol.

8. Procédé selon la revendication 7, dans lequel ledit oligomère à base de polythiol présente des liaisons disulfure et est préparé par une réaction d'un monomère à base de polythiol avec du soufre, en présence d'un catalyseur basique.

9. Procédé selon la revendication 7, dans lequel ledit oligomère à base de polythiol est représenté par la formule générale : 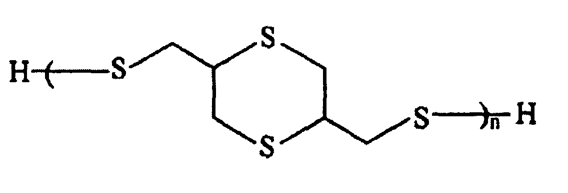 dans laquelle n est un nombre entier de 1 à 21.

10. Procédé selon la revendication 7, dans lequel ledit oligomère à base de polythiol est représenté par la formule générale : 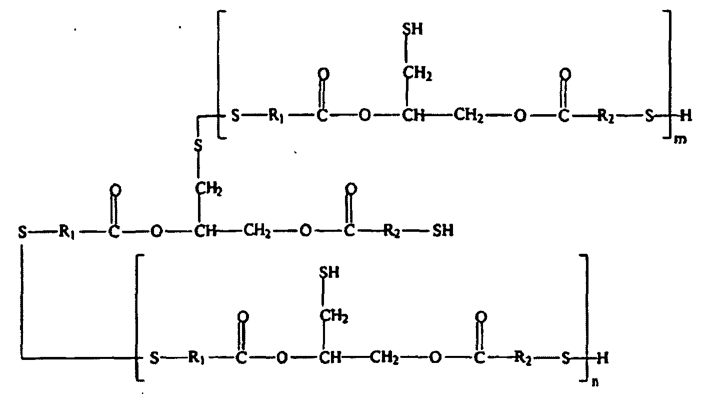 dans laquelle R₁ et R₂ sont chacun choisis, indépendamment l'un de l'autre parmi un alkylène à chaîne linéaire ou ramifiée, un alkylène cyclique, un phénylène et un phénylène substitué par un alkyle en C₁ à C₉, et n et m sont indépendamment l'un de l'autre des nombres entiers de 0 à 21 de manière que n + m ait une valeur d'au moins un.

11. Procédé selon l'une quelconque des revendications 1 à 10, dans lequel ledit monomère à base de polycyanate est un polycyanate comportant au moins deux groupes isocyanate.

12. Procédé selon l'une quelconque des revendications 1 à 10, dans lequel ledit monomère à base de polycyanate est un polycyanate comportant un ou plusieurs atomes de soufre dans son squelette.

13. Procédé selon la revendication 12, dans lequel le monomère à base de polycyanate comportant un ou plusieurs atomes de soufre dans son squelette est l'un de ceux présentant la structure générale : 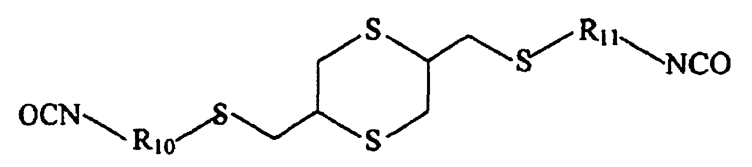 dans laquelle R₁₀ et R₁₁ représentent chacun indépendamment l'un de l'autre un alkyle en C₁ à C₃.

14. Procédé selon la revendication 11, dans lequel ledit monomère à base de polycyanate est choisi dans le groupe constitué par le diisocyanate de α,α'-xylène, le diisocyanate de α,α,α',α'-tétraméthylxylène, le diisocyanate d'isophorone, le bis(isocyanatocyclohexyl)méthane, le diisocyanate d'ortho-toluidine, le diisocyanate d'ortho-tolylidine, I diisocyanate d'ortho-tolylène et le diisocyanate de 4,4'-diphénylméthane, et des mélanges desdits monomères à base de polycyanate.

15. Procédé selon l'une quelconque des revendications 1 à 14, dans lequel ledit réactif à base de polyamine dudit second composant est choisi dans le groupe constitué par des éthylèneamines, de la (C₁-C₃)dialkyltoluènediamine, de la méthylène dianiline, du di(para-aminobenzoate) de triméthylène glycol, une diamine représentée par la formule générale (A) : 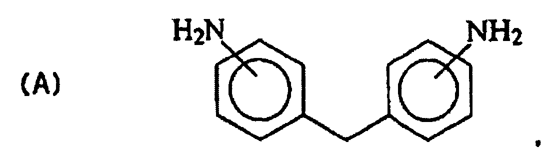 une diamine représentée par la formule générale (B) : 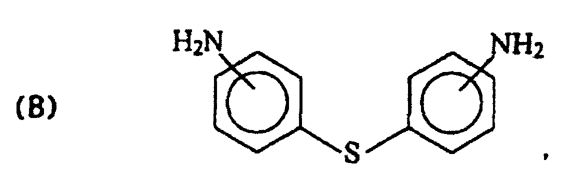 et une diamine représentée par la formule générale (C) :

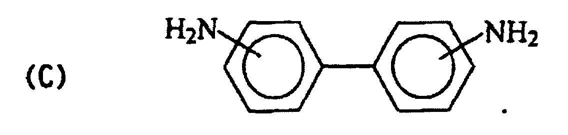

16. Procédé selon la revendication 15, dans lequel la diamine de formule générale (A) est choisie parmi une ou plusieurs d'un groupe constitué de : 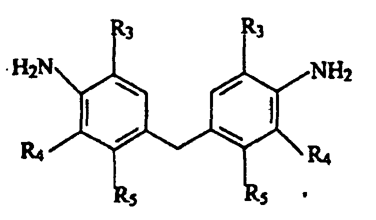 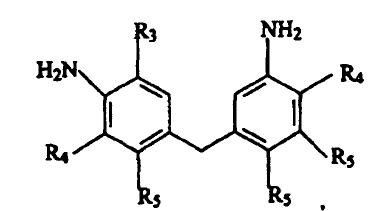 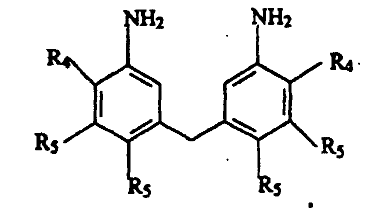 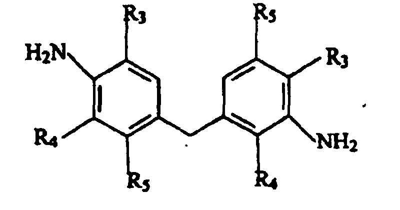 et 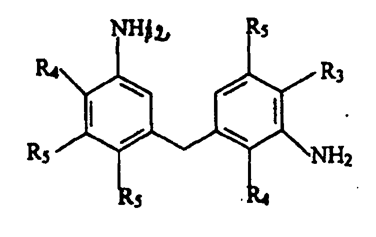 où R₃ et R₄ représentent chacun indépendamment l'un de l'autre un alkyle en C₁ à C₃, et R₅ est choisi parmi de l'hydrogène et un halogène, et des mélanges desdites diamines.

17. Procédé selon la revendication 15, dans lequel la diamine de formule générale (B) est choisie parmi une ou plusieurs d'un groupe constitué de : 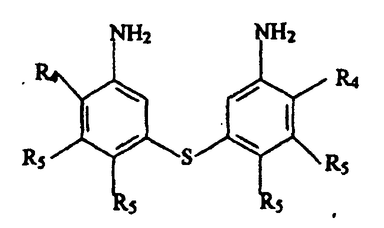 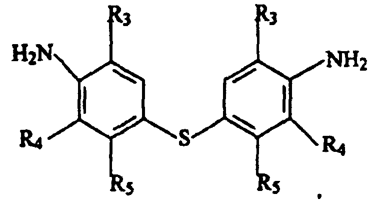 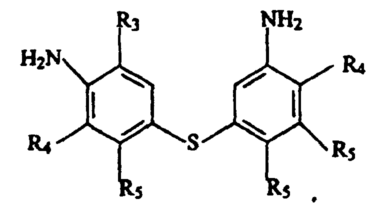 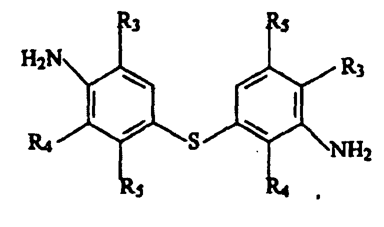 et 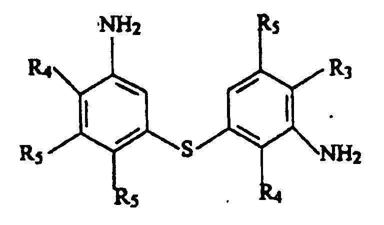 où R₃ et R₄ représentent chacun indépendamment l'un de l'autre un alkyle en C₁ à C₃, et R₅ est choisi parmi de l'hydrogène et un halogène, et des mélanges desdites diamines.

18. Procédé selon la revendication 15 dans lequel la diamine de formule générale (C) est choisie parmi une ou plusieurs d'un groupe constitué de : 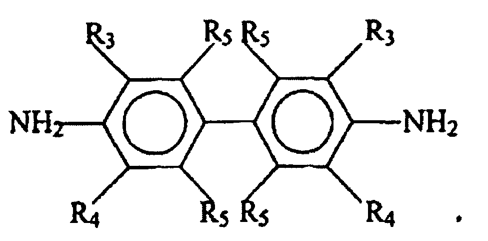 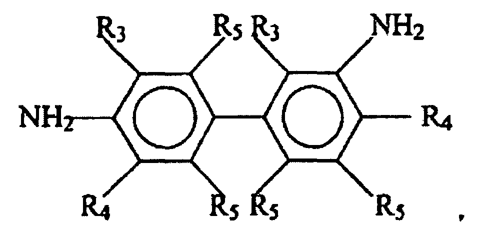 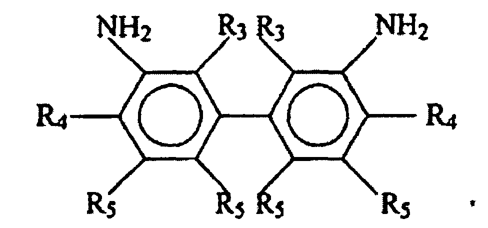 et 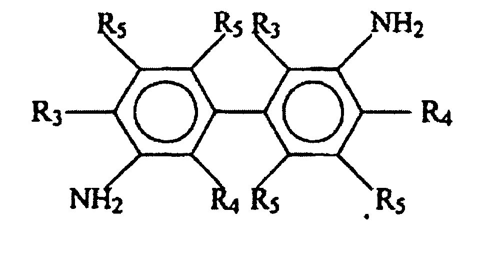 où R₃ et R₄ représentent chacun indépendamment l'un de l'autre un groupe alkyle en C₁ à C₃, et R₅ est choisi parmi de l'hydrogène et un halogène, et des mélanges desdites diamines.

19. Procédé selon l'une quelconque des revendications 1 à 18, dans lequel ledit réactif à base de polyamine dudit deuxième composant est un sulfure dialkylique de diaminotoluène.

20. Procédé selon la revendication 19, dans lequel le sulfure dialkylique de diaminotoluène est un sulfure de 2,6-diaminotoluène-3,5-dialkyle de formule générale : 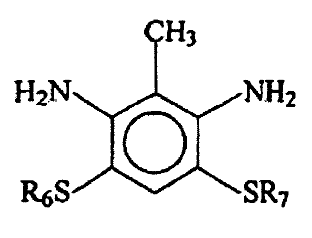 dans laquelle R₆ et R₇ représentent des groupes alkyle en C₁ à C₂₀ linéaires, ramifiés ou cycliques.

21. Procédé selon l'une quelconque des revendications 1 à 20, comprenant en outre une étape d'addition d'un catalyseur à ladite composition à deux composants.

22. Procédé selon la revendication 21, dans lequel ledit catalyseur est choisi dans le groupe constitué par des amines tertiaires et des composés organométalliques.

23. Procédé selon l'une des revendications 1 à 22, comprenant en outre une étape de mélange dudit premier composant et dudit deuxième composant.

24. Procédé selon l'une quelconque des revendications 1 à 23, comprenant en outre une étape de dégazage dudit premier composant.

25. Procédé selon l'une quelconque des revendications 1 à 24, comprenant en outre une étape de dégazage dudit deuxième composant.

26. Procédé selon la revendication 23, comprenant en outre une étape d'addition du mélange dans un moule.

27. Procédé selon la revendication 26, comprenant en outre une étape de chauffage du moule et du mélange dudit premier composant et dudit deuxième composant à l'intérieur de ce dernier.

28. Procédé selon la revendication 27, dans lequel ladite étape de chauffage comprend en outre un chauffage du moule et dudit mélange à une température de 100°C à 140°C sur une période de 0,5 à 16 heures.

29. Procédé selon l'une quelconque des revendications 1 à 28 dans lequel ledit premier composant et ledit deuxième composant sont polymérisés ensemble en des quantités suffisantes pour procurer une proportion d'équivalents molaires des groupes (NCO + NCS) par rapport aux groupes (-NH₂ + -NH-) de 0,5 à 10.

30. Procédé selon la revendication 29, dans lequel ledit premier composant et ledit deuxième composant sont polymérisés ensemble en des quantités suffisantes pour procurer une proportion d'équivalents molaires des groupes (NCO + NCS) par rapport aux groupes (-NH₂ + -NH-) de 0,5 à 5.

31. Procédé selon l'une quelconque des revendications 1 à 30, comprenant en outre une étape d'addition d'additifs choisis dans le groupe constitué par des stabilisants à la lumière, des stabilisants à la chaleur, des antioxydants, des absorbeurs de lumière ultraviolette, des agents de démoulage, des colorants statiques (non photochromiques), des pigments et des additifs plastifiants et des additifs anti-jaunissement, et des mélanges desdits additifs.

32. Procédé selon la revendication 31, dans lequel les additifs sont présents dans ladite composition à deux composants, en une quantité allant jusqu'à 10% en poids de ladite composition à deux composants.

33. Procédé selon la revendication 31 ou 32, dans lequel l'agent de démoulage est un ester de phosphate d'alkyle en C₈ à C₁₆.

34. Procédé selon l'une quelconque des revendications 1 à 33, dans lequel ledit polymère comprend en outre une substance photochromique.

35. Polymère que l'on peut obtenir par le procédé selon l'une quelconque des revendications 1 à 34.

36. Article photochromique dérivé d'un polymère selon la revendication 35, comprenant une substance photochromique.

37. Article photochromique selon la revendication 36, dans lequel la substance photochromique est mélangée avec ledit premier composant.

38. Article photochromique selon la revendication 36, dans lequel la substance photochromique est mélangée avec ledit deuxième composant.

39. Article photochromique selon l'une quelconque des revendication 36 à 38, dans lequel la substance photochromique est appliquée sur ledit article photochromique à raison de 0,15 à 0,35 milligrammes par centimètre carré de surface dudit article photochromique.

40. Article photochromique selon l'une quelconque des revendications 36 à 39, dans lequel ladite substance photochromique est choisie dans le groupe constitué par des spiro(indoline)naphtoxazines, des spiro(indoline)benzoxazines, des chromènes, des benzopyranes, des naphtopyranes, des dithiozonates organométalliques, des arylhydrazidates (arylazo)-thioformiques, des dithizonates de mercure, des fulgides, des fulgimides, des fulgides de 3-furyle, des fulgides de 3-thiényle, des fulgimides de 3-furyle et des fulgimides de 3-thiényle, et des mélanges desdites substances photochromiques.

41. Article photochromique selon l'une quelconque des revendications 36 à 40, dans lequel ladite substance photochromique présente un maximum d'absorption activée comprise dans la plage du visible de 400 à 500 nanomètres.

42. Article photochromique selon l'une quelconque des revendications 36 à 40 dans lequel ladite substance photochromique présente un maximum d'absorption activée comprise dans la plage du visible de 500 à 700 nanomètres.

43. Article photochromique selon la revendication 42, dans lequel ladite substance photochromique présente un maximum d'absorption activée comprise dans la plage du visible de 590 à 700 nanomètres.

44. Article photochromique selon l'une quelconque des revendications 36 à 43, dans lequel la substance photochromique est appliquée sur ou incorporée dans ledit article photochromique en utilisant un procédé choisi dans la liste constituée par le durcissement au moulage, l'encapsulation dans une matrice d'un polymère organique et l'incorporation dans la composition à deux composants avant le durcissement.

45. Article photochromique selon l'une quelconque des revendications 36 à 44, dans lequel ladite substance photochromique est appliquée par imbibition de l'article photochromique, de manière à réaliser la perméation de la substance photochromique dans le polymère.

46. Article photochromique selon la revendication 45, dans lequel le procédé d'imbibition comprend une absorption par transfert assisté par un solvant.

47. Article photochromique selon la revendication 45, dans lequel le procédé d'imbibition comprend un transfert en phase vapeur.

48. Article photochromique selon l'une quelconque des revendications 36 à 47, dans lequel ladite substance photochromique est appliquée en tant que revêtement sur la surface de l'article photochromique.

49. Article photochromique selon les revendications 45 à 48, dans lequel le procédé d'imbibition comprend les étapes de :
revêtement de l'article photochromique avec la substance photochromique,
chauffage de la surface de l'article photochromique, et
élimination du revêtement résiduel de la surface de l'article photochromique.

50. Article photochromique selon l'une quelconque des revendications 36 à 49, dans lequel ledit article photochromique est une lentille optique destinée à la correction de défauts de la vision.

51. Procédé selon l'une quelconque des revendications 1 à 34, polymère selon la revendication 35 ou article photochromique selon l'une quelconque des revendications 36 à 50, où la polymérisation dudit premier composant et dudit deuxième composant est réalisée par moulage par injection et réaction , où ledit premier composant et ledit deuxième composant sont chacun dosés à partir d'un cylindre au travers d'une tête mélangeuse et injectés dans une machine de moulage.
